# EUROPEAN PATENT SPECIFICATION

(11) **EP 3 048 845 B1**
(45) Date of publication and mention of the grant of the patent: **11.04.2018**
(21) Application number: 13896098.4
(22) Date of filing: 21.10.2013
(51) Int. Cl.: H04W 72/04

(54) **DEVICE AND METHOD FOR DATA TRANSMISSION**
SYSTEM UND VERFAHREN ZUR DATENÜBERTRAGUNG
DISPOSITIF ET PROCÉDÉ DE TRANSMISSION DE DONNÉES

(43) Date of publication of application: 27.07.2016
(73) Proprietor: Huawei Technologies Co., Ltd., Longgang District Shenzhen, Guangdong 518129 (CN)
(72) Inventor: ZHANG, Jian, Shenzhen Guangdong 518129 (CN); ZENG, Qinghai, Shenzhen Guangdong 518129 (CN)
(74) Representative: Maiwald Patentanwalts GmbH
(86) International application number: PCT/CN2013/085598
(87) International publication number: WO 2015/058336

(56) References cited:
- WO-A1-2013/034052
- WO-A1-2013/048096
- WO-A2-2011/063244
- CN-A- 102 369 755
- CN-A- 102 892 143
- CN-A- 102 958 108
- US-A1- 2013 083 783
- US-A1- 2013 088 983

## Description

### TECHNICAL FIELD

The present invention relates to the field of communications technologies, and in particular, to a data transmission apparatus and method.

### BACKGROUND

With development of mobile communications technologies, the 3rd Generation Partnership Project (The 3rd Generation Partnership Project, 3GPP for short) allows user equipment (User Equipment, UE for short) to be connected to an application server or the Internet by means of wireless fidelity (Wireless Fidelity, wifi for short) by using an evolved packet core (Evolved Packet Core, EPC for short) of a mobile communications network, so as to implement data offloading.

In the prior art, when the UE performs wireless communication with a mobile communications network, such as Long Term Evolution (Long Term Evolution, LTE for short) or a Universal Mobile Telecommunications System (Universal Mobile Telecommunications System, UMTS for short), and wifi at the same time, data is offloaded and combined by using a PGW in an EPC; a 3GPP radio access network (Radio Access Network, RAN for short) and a wifi access point (Access Point, AP for short) respectively manage a 3GPP cellular radio resource and a wifi radio resource.

However, data offloading performed by the PGW is limited only to a service level, for example, a File Transfer Protocol (File Transfer Protocol, FTP for short) service or a streaming (Streaming) service is offloaded to wifi, which leads to low radio resource utilization.

US 2013/083783 A1 describes systems and methods for Multi-Radio Access Technology, RAT, Carrier Aggregation, MRCA, wireless wide area network, WWAN, assisted wireless local area network, WLAN, discovery, association, and flow switching.

WO 2013/034052 A1 describes data transmission methods and devices. The methods include: a first wireless access device determining the UE to be shunted, and sending a shunt configuration message to the UE, so that the UE obtains information about an RB which can shunt after receiving the shunt configuration message.

CN 102 369 755 A describes methods and devices and base stations for transmitting data, wherein, the methods comprise the steps of using the base station to receive the data sent by a core network, wherein, the data is the data needing to be sent to a terminal, and the terminal is the terminal which is connected with the base station and a wifi access point separately; selecting one of the base station and the wifi access point according to the load conditions of the base station and the wifi access point.

US 2013/088983 A1 describes methods and apparatuses for integrating third generation partnership, 3GPP, radio access network and IEEE 802.11 radio access technologies. This may be done at a medium access control, MAC, layer or below the MAC layer.

### SUMMARY

Embodiments of the present invention provide a data transmission apparatus and method, so as to resolve a problem of low radio resource utilization during a data transmission process in the prior art. Aspects of the present invention are defined by the independent claims.

According to a first aspect, an aspect of the present invention provides a data transmission apparatus, including:
a receiving module, configured to receive a downlink data packet sent by a core network device; and
a sending module, configured to send a first downlink data packet in the downlink data packet to user equipment UE, and send a second downlink data packet in the downlink data packet to a Wireless Fidelity access point wifi AP through an Xw interface, so that the wifi AP sends the second downlink data packet to the UE, and the base station manages a wifi radio resource by using the Xw interface.

In a first possible implementation manner of the first aspect, the apparatus further includes:
a communication adaptation layer establishment module, configured to establish a communication adaptation layer between the base station and the wifi AP, where the communication adaptation layer is used to establish a mapping relationship from a radio bearer RB of a cellular network to a wifi access category AC of a wireless local area network.

With reference to the first possible implementation manner of the first aspect, in a second possible implementation manner, the sending module is further configured to:
send, to the wifi AP, a request message for adding a wifi secondary cell wifiSCell, and send, to the user equipment UE, a configuration message for adding a wifi secondary cell
wifiSCell, where the request message for adding a wifiscell or the configuration message for adding a wifiSCell includes information about the communication adaptation layer and at least one of the following: a quantity of required channels, a channel number, a channel frequency, and a channel bandwidth; or
send a request message for deleting a wifiSCell to the wifi AP and send an indication message for deleting a wifiscell to the UE, where the request message for deleting a wifiSCell or the wifiscell indication message includes at least one of the following: a quantity of required channels, a channel number, a channel frequency, and a channel bandwidth.

With reference to the first possible implementation manner of the first aspect, in a third possible implementation manner,
the communication adaptation layer is used to add the mapping relationship between a radio bearer RB and a wifi access category AC to header information of the second downlink data packet, so that the second downlink data packet can be transmitted by using the wireless local area network to which the wifi AP belongs.

In a fourth possible implementation manner of the first aspect, the sending module is further configured to send an Xw interface establishment request to the wifi AP, where the Xw interface establishment request carries the following information: a General Packet Radio Service Tunneling Protocol-User Plane tunnel endpoint identifier GTP-U TEID of the base station and a Media Access Control MAC address of the base station; and
the receiving module is further configured to receive an Xw interface establishment response sent by the wifi AP, where the Xw interface establishment response carries the following information: a GTP-U TEID of the wifi AP and a MAC address of the wifi AP.

With reference to the third possible implementation manner of the first aspect, in a fifth possible implementation manner, the receiving module is further configured to receive a first uplink data packet sent by the UE; and receive a second uplink data packet sent by the wifi AP;
the apparatus further includes a processing module, configured to combine the first uplink data packet and the second uplink data packet into an uplink data packet; and
the sending module is further configured to send the uplink data packet to the core network device.

With reference to the fifth possible implementation manner of the first aspect, in a sixth possible implementation manner, the processing module is specifically configured to:
remove, from the second data packet, header information that includes the mapping relationship between a radio bearer RB and a wifi access category AC, so that the second data packet is converted to have a format applicable to the cellular network; and
reorder the second data packet and the first data packet, to form the uplink data packet.

With reference to the first aspect, or any one of the first to sixth possible implementation manners of the first aspect, in a seventh possible implementation manner,
the receiving module is further configured to receive a first retransmission indication message sent by the wifi AP, where the first retransmission indication message is generated by the wifi AP after the wifi AP determines that the second downlink data packet is not sent successfully within a preset time, and the first retransmission indication message includes a data packet identifier of a data packet that needs to be retransmitted; and
the sending module is further configured to send, to the UE according to the first retransmission indication message, the data packet corresponding to the data packet identifier.

With reference to the first or second possible implementation manner of the first aspect, in an eighth possible implementation manner, the sending module is further configured to:
send a primary channel negotiation message to the wifi AP, where the required channel determined by the base station includes the primary channel; and
send a primary channel indication message to the UE, where the primary channel indication message includes a channel number of a primary channel determined by the wifi AP.

With reference to the first or second possible implementation manner of the first aspect, in a ninth possible implementation manner, the sending module is further configured to:
send a channel addition request message to the wifi AP, where the channel addition request message includes a channel number of a to-be-added channel, and the required channel determined by the base station includes the to-be-added channel; and
send a channel addition indication message to the UE, where the channel addition indication message includes a channel number of the to-be-added channel determined by the wifi AP.

With reference to the first or second possible implementation manner of the first aspect, in a tenth possible implementation manner, the sending module is further configured to:
send a channel deletion request message to the wifi AP, where the channel deletion request message includes a channel number of a to-be-deleted channel; and
send a channel deletion indication message to the UE, where the channel deletion indication message includes a channel number of the to-be-deleted channel determined by the wifi AP.

With reference to the first or second possible implementation manner of the first aspect, in an eleventh possible implementation manner, the sending module is further configured to:
send an indication message for deactivating a wifi channel to the UE, where the indication message for deactivating the wifi channel includes a channel number of the to-be-deactivated wifi channel; or
send an indication message for activating a wifi channel to the UE, where the indication message for activating the wifi channel includes a channel number of the to-be-activated wifi channel.

With reference to the first or second possible implementation manner of the first aspect, in a twelfth possible implementation manner, the sending module is further configured to:
send a wifi channel sequence indication message to the UE, so that the UE receives or sends data by using the wifi channel and by using a sequence determined by the base station.

With reference to the first aspect or the first or second possible implementation manner of the first aspect, in a thirteenth possible implementation manner, the apparatus further includes:
a determining module, configured to determine a size of the second downlink data packet according to load of a wifi channel and/or strength of a wifi signal.

With reference to the second possible implementation manner of the first aspect, in a fourteenth possible implementation manner, the wifiSCell request message sent by the sending module further includes:
a MAC address of the UE, capability information of the UE, context information of the UE, and radio bearer RB identifier information and corresponding QoS information of the second data packet; and
the receiving module is further configured to receive a response message for adding a wifiSCell that is sent by the wifi AP, where the response message for adding a wifiSCell includes: capability information of the wifi AP.

According to a second aspect, an aspects of the present invention provides a data transmission apparatus, including:
a receiving module, configured to receive a first downlink data packet sent by a base station; and receive a second downlink data packet sent by a Wireless Fidelity access point wifi AP; and
a processing module, configured to combine the first downlink data packet and the second downlink data packet into a downlink data packet,
where the second downlink data packet is sent by the base station to the wifi AP through an Xw interface, and the Xw interface is used by the base station to manage a wifi radio resource.

In a first possible implementation manner of the second aspect, header information of the second downlink data packet includes a mapping relationship between a radio bearer RB of a cellular network and a wifi access category AC of a wireless local area network, and the mapping relationship between a radio bearer RB of a cellular network and a wifi access category AC of a wireless local area network enables the second downlink data packet to be applicable to the wireless local area network to which the wifi AP belongs; and
the processing module is specifically configured to:
remove, from the second downlink data packet and according to information about a communication adaptation layer, the header information that includes the mapping relationship between a radio bearer RB and a wifi access category AC, so that the second data packet is converted to be applicable to the cellular network to which the base station belongs; and
reorder the first downlink data packet and the second downlink data, to form a downlink data packet.

With reference to the first possible implementation manner of the second aspect, in a second possible implementation manner, the receiving module is further configured to:
receive a configuration message for adding a wifi secondary cell wifiSCell that is sent by the base station, where the configuration message for adding a wifiSCell includes the information about the communication adaptation layer and at least one of the following: a quantity of required channels, a channel number, a channel frequency, and channel bandwidth information, and the information about the communication adaptation layer includes the mapping relationship, established by the base station, from a radio bearer RB to a wifi access category AC; or
receive an indication message for deleting a wifiSCell that is sent by the base station, where the indication message for deleting a wifiSCell includes at least one of the following: a quantity of required channels, a channel number, a channel frequency, and channel bandwidth information.

With reference to the second aspect or the first or second possible implementation manner of the second aspect, in a third possible implementation manner, the apparatus further includes a sending module, configured to:
send a first uplink data packet to the base station; and
send a second uplink data packet to the wifi AP, so that the wifi AP sends the second uplink data packet to the base station.

With reference to the third possible implementation manner of the second aspect, in a fourth possible implementation manner, the processing module is further configured to:
add the mapping relationship between a radio bearer RB and a wifi access category AC to header information of the second data packet, so that the second uplink data packet can be transmitted by using the wireless local area network to which the wifi AP belongs.

With reference to the third or fourth possible implementation manner of the second aspect, in a fifth possible implementation manner,
the receiving module is further configured to receive a second retransmission indication message sent by the wifi AP, where the second retransmission indication message is generated by the wifi AP after the wifi AP determines that the second uplink data packet is not sent successfully within a preset time, and the second retransmission indication message includes a data packet identifier of a data packet that needs to be retransmitted; and
the sending module is further configured to send, to the base station according to the second retransmission indication message, the data packet corresponding to the data packet identifier.

With reference to the second possible implementation manner of the second aspect, in a sixth possible implementation manner, the receiving module is further configured to:
receive a primary channel indication message sent by the base station, where the primary channel indication message includes a channel number of a primary channel determined by the wifi AP.

With reference to the second possible implementation manner of the second aspect, in a seventh possible implementation manner, the receiving module is further configured to:
receive a channel addition indication message sent by the base station, where the channel addition indication message includes a channel number of a to-be-added channel determined by the wifi AP; or
receive a channel deletion indication message sent by the base station, where the channel deletion indication message includes a channel number of a to-be-deleted channel determined by the wifi AP.

With reference to the second possible implementation manner of the second aspect, in an eighth possible implementation manner, the receiving module is further configured to:
receive an indication message for deactivating a wifi channel, where the indication message for deactivating the wifi channel is sent by the base station and includes a channel number of the to-be-deactivated wifi channel; or
receive an indication message for activating a wifi channel, where the indication message for activating the wifi channel is sent by the base station and includes a channel number of the to-be-activated wifi channel.

With reference to the second possible implementation manner of the second aspect, in a ninth possible implementation manner, the receiving module is further configured to:
receive a wifi channel sequence indication message sent by the base station; and
the receiving module or the sending module is specifically configured to send or receive data by using the wifi channel and by using a sequence determined by the base station.

With reference to the second possible implementation manner of the second aspect, in a tenth possible implementation manner, the processing module is further configured to:
determine a size of the second uplink data packet according to load of a wifi channel and/or strength of a wifi signal.

According to a third aspect, an aspect of the present invention provides a data transmission apparatus, including:
a receiving module, configured to receive a second downlink data packet that is sent by a base station through an Xw interface; and
a sending module, configured to send the second downlink data packet to user equipment UE;
where the Xw interface is used by the base station to manage a wifi radio resource.

In a first possible implementation manner of the third aspect, header information of the second downlink data packet includes a mapping relationship between a radio bearer RB of a cellular network and a wifi access category AC of a wireless local area network, and the mapping relationship is used to enable the second downlink data packet to be transmitted by using the wireless local area network to which the wifi AP belongs.

With reference to the third aspect or the first possible implementation manner of the third aspect, in a second possible implementation manner, the receiving module is further configured to:
receive a request message for adding a wifi secondary cell wifiSCell that is sent by the base station, where the request message for adding a wifiSCell includes information about a communication adaptation layer and at least one of the following: a quantity of required channels, a channel number, a channel frequency, and channel bandwidth information, and the information about the communication adaptation layer includes the mapping relationship from a radio bearer RB of a cellular network to a wifi access category AC of a wireless local area network; or
receive a request message for deleting a wifiSCell that is sent by the base station, where the request message for deleting a wifiSCell includes at least one of the following: a quantity of required channels, a channel number, a channel frequency, and channel bandwidth information, and the wifi AP sends a response message for deleting a wifiSCell to the base station.

With reference to the second possible implementation manner of the third aspect, in a third possible implementation manner, the receiving module is further configured to receive an Xw interface establishment request sent by the base station, where the Xw interface establishment request carries at least one of the following: a base station identifier of the base station, a General Packet Radio Service Tunneling Protocol-User Plane tunnel endpoint identifier GTP-U TEID of the base station, an Internet Protocol IP address of the base station, and a Media Access Control MAC address of the base station; and
the sending module is further configured to send an Xw interface establishment response to the base station, where the Xw interface establishment response carries at least one of the following: an AP identifier of the wifi AP, a GTP-U TEID of the wifi AP, an IP address of the wifi AP, and a MAC address of the wifi AP.

With reference to the third aspect, or any one of the first to third possible implementation manners of the third aspect, in a fourth possible implementation manner,
the receiving module is further configured to receive a second uplink data packet sent by the UE; and
the sending module is further configured to send the second uplink data packet to the base station.

With reference to the third aspect, or any one of the first to fourth possible implementation manners of the third aspect, in a fifth possible implementation manner,
the sending module is further configured to: when the wifi AP determines that the second downlink data packet is not successfully sent to the UE within a preset time, the wifi AP sends a first retransmission indication message to the base station, where the first retransmission indication message includes a data packet identifier of a data packet that needs to be retransmitted, so that the base station sends, to the UE, the data packet corresponding to the data packet identifier.

With reference to the fifth possible implementation manner of the third aspect, in a sixth possible implementation manner, the sending module is further configured to: when the wifi AP determines that the second uplink data packet is not successfully sent to the base station within a preset time, the wifi AP sends a second retransmission indication message to the UE, where the second retransmission indication message includes a data packet identifier of a data packet that needs to be retransmitted, so that the UE sends, to the base station, the data packet corresponding to the data packet identifier.

With reference to the second possible implementation manner of the third aspect, in a seventh possible implementation manner, the receiving module is further configured to receive a primary channel negotiation message sent by the base station; and
the sending module is further configured to send a primary channel negotiation response message to the base station, where the primary channel negotiation response message includes a channel number of a primary channel determined by the wifi AP.

With reference to the seventh possible implementation manner of the third aspect, in an eighth possible implementation manner, the receiving module is further configured to:
receive a channel addition request message sent by the base station, where the channel addition request message includes a channel number of a to-be-added channel; or
receive a channel deletion request message sent by the base station, where the channel deletion request message includes a channel number of a to-be-deleted channel.

With reference to the seventh possible implementation manner of the third aspect, in a ninth possible implementation manner, the request message for adding a wifi secondary cell wifiSCell that is sent by the base station and received by the wifi AP further includes:
a MAC address of the UE, capability information of the UE, context information of the UE, and radio bearer RB identifier information and corresponding QoS information of the second data packet; and
the sending module is further configured to:
   send, to the base station, a response message for adding a wifiSCell, where the response message for adding a wifiSCell includes: capability information of the wifi AP.

According to a fourth aspect, an aspect of the present invention provides a data transmission method, including:
receiving, by a base station, a downlink data packet sent by a core network device; and
sending, by the base station, a first downlink data packet in the downlink data packet to user equipment UE, and sending a second downlink data packet in the downlink data packet to a Wireless Fidelity access point wifi AP through an Xw interface, so that the wifi AP sends the second downlink data packet to the UE, where the base station manages a wifi radio resource by using the Xw interface.

In a first possible implementation manner of the fourth aspect, the method further includes:
establishing, by the base station, a communication adaptation layer between the base station and the wifi AP, where the communication adaptation layer is used to establish a mapping relationship from a radio bearer RB of a cellular network to a wifi access category AC of a wireless local area network.

With reference to the first possible implementation manner of the fourth aspect, in a second possible implementation manner, the method further includes:
sending, by the base station to the wifi AP, a request message for adding a wifi secondary cell wifiSCell, and sending, to the user equipment UE, a configuration message for adding a wifi secondary cell wifiSCell, where the request message for adding a wifiSCell or the configuration message for adding a wifiSCell includes information about the communication adaptation layer and at least one of the following: a quantity of required channels, a channel number, a channel frequency, and a channel bandwidth; or
sending, by the base station, a request message for deleting a wifiSCell to the wifi AP, and sending an indication message for deleting a wifiscell to the UE, where the request message for deleting a wifiSCell or the wifiscell indication message includes at least one of the following: a quantity of required channels, a channel number, a channel frequency, and a channel bandwidth.

With reference to the first possible implementation manner of the fourth aspect, in a third possible implementation manner, the method further includes:
adding, by the base station, the mapping relationship between a radio bearer RB and a wifi access category AC to header information of the second downlink data packet, so that the second downlink data packet can be transmitted by using the wireless local area network to which the wifi AP belongs.

In a fourth possible implementation manner of the fourth aspect, the method further includes:
sending, by the base station, an Xw interface establishment request to the wifi AP, where the Xw interface establishment request carries the following information: a General Packet Radio Service Tunneling Protocol-User Plane tunnel endpoint identifier GTP-U TEID of the base station and a Media Access Control MAC address of the base station; and
receiving, by the base station, an Xw interface establishment response sent by the wifi AP, where the Xw interface establishment response carries the following information: a GTP-U TEID of the wifi AP and a MAC address of the wifi AP.

With reference to the third possible implementation manner of the fourth aspect, in a fifth possible implementation manner, the method further includes:
receiving, by the base station, a first uplink data packet sent by the UE;
receiving, by the base station, a second uplink data packet sent by the wifi AP;
combining, by the base station, the first uplink data packet and the second uplink data packet into an uplink data packet; and
sending, by the base station, the uplink data packet to the core network device.

With reference to the fifth possible implementation manner of the fourth aspect, in a sixth possible implementation manner, the combining, by the base station, the first uplink data packet and the second uplink data packet into an uplink data packet includes:
removing, by the base station from the second data packet, header information that includes the mapping relationship between a radio bearer RB and a wifi access category AC, so that the second data packet is converted to have a format applicable to the cellular network; and
reordering, by the base station, the second data packet and the first data packet, to form the uplink data packet.

With reference to the fourth aspect, or any one of the first to sixth possible implementation manners of the fourth aspect, in a seventh possible implementation manner, the method further includes:
receiving, by the base station, a first retransmission indication message sent by the wifi AP, where the first retransmission indication message is generated by the wifi AP after the wifi AP determines that the second downlink data packet is not sent successfully within a preset time, and the first retransmission indication message includes a data packet identifier of a data packet that needs to be retransmitted; and
sending, by the base station to the UE according to the first retransmission indication message, the data packet corresponding to the data packet identifier.

With reference to the first or second possible implementation manner of the fourth aspect, in an eighth possible implementation manner, the method includes:
sending, by the base station, a primary channel negotiation message to the wifi AP, where the required channel determined by the base station includes the primary channel; and
sending, by the base station, a primary channel indication message to the UE, where the primary channel indication message includes a channel number of a primary channel determined by the wifi AP.

With reference to the first or second possible implementation manner of the fourth aspect, in a ninth possible implementation manner, the method further includes:
sending, by the base station, a channel addition request message to the wifi AP, where the channel addition request message includes a channel number of a to-be-added channel, and the required channel determined by the base station includes the to-be-added channel; and
sending, by the base station, a channel addition indication message to the UE, where the channel addition indication message includes a channel number of the to-be-added channel determined by the wifi AP.

With reference to the first or second possible implementation manner of the fourth aspect, in a tenth possible implementation manner, the method further includes:
sending, by the base station, a channel deletion request message to the wifi AP, where the channel deletion request message includes a channel number of a to-be-deleted channel; and
sending, by the base station, a channel deletion indication message to the UE, where the channel deletion indication message includes a channel number of the to-be-deleted channel determined by the wifi AP.

With reference to the first or second possible implementation manner of the fourth aspect, in an eleventh possible implementation manner, the method further includes:
sending, by the base station, an indication message for deactivating a wifi channel to the UE, where the indication message for deactivating the wifi channel includes a channel number of the to-be-deactivated wifi channel; or
sending, by the base station, an indication message for activating a wifi channel to the UE, where the indication message for activating the wifi channel includes a channel number of the to-be-activated wifi channel.

With reference to the first or second possible implementation manner of the fourth aspect, in a twelfth possible implementation manner, the method further includes:
sending, by the base station, a wifi channel sequence indication message to the UE, so that the UE receives or sends data by using the wifi channel and by using a sequence determined by the base station.

With reference to the fourth aspect or the first or second possible implementation manner of the fourth aspect, in a thirteenth possible implementation manner, the method further includes:
determining, by the base station, a size of the second downlink data packet according to load of a wifi channel and/or strength of a wifi signal.

With reference to the second possible implementation manner of the fourth aspect, in a fourteenth possible implementation manner, the request message for adding a wifiscell that is sent by the base station to the wifi AP further includes: a MAC address of the UE, capability information of the UE, context information of the UE, and radio bearer RB identifier information and corresponding QoS information of the second data packet; and
the method further includes: receiving, by the base station, a response message for adding a wifiSCell that is sent by the wifi AP, where the response message for adding a wifiSCell includes: capability information of the wifi AP.

According to a fifth aspect, an aspect of the present invention provides a data transmission method, including:
receiving, by user equipment UE, a first downlink data packet sent by a base station;
receiving, by the UE, a second downlink data packet sent by a Wireless Fidelity access point wifi AP; and
combining, by the UE, the first downlink data packet and the second downlink data packet into a downlink data packet,
where the second downlink data packet is sent by the base station to the wifi AP through an Xw interface, and the Xw interface is used by the base station to manage a wifi radio resource.

In a first possible implementation manner of the fifth aspect, header information of the second downlink data packet includes a mapping relationship between a radio bearer RB of a cellular network and a wifi access category AC of a wireless local area network, and the mapping relationship between a radio bearer RB of a cellular network and a wifi access category AC of a wireless local area network enables the second downlink data packet to be applicable to the wireless local area network to which the wifi AP belongs; and
the combining, by the UE, the first downlink data packet and the second downlink data packet into a downlink data packet includes:
removing, by the UE from the second downlink data packet and according to information about a communication adaptation layer, the header information that includes the mapping relationship between a radio bearer RB and a wifi access category AC, so that the second downlink data packet is converted to be applicable to the cellular network to which the base station belongs; and
reordering, by the UE, the first downlink data packet and the second downlink data, to form the downlink data packet.

With reference to the first possible implementation manner of the fifth aspect, in a second possible implementation manner, the method further includes:
receiving, by the UE, a configuration message for adding a wifi secondary cell wifiSCell that is sent by the base station, where the configuration message for adding a wifiSCell includes the information about the communication adaptation layer and at least one of the following: a quantity of required channels, a channel number, a channel frequency, and channel bandwidth information, and the information about the communication adaptation layer includes the mapping relationship, established by the base station, from a radio bearer RB to a wifi access category AC; or
receiving, by the UE, an indication message for deleting a wifiSCell that is sent by the base station, where the indication message for deleting a wifiSCell includes at least one of the following: a quantity of required channels, a channel number, a channel frequency, and channel bandwidth information.

With reference to the fifth aspect or the first or second possible implementation manner of the fifth aspect, in a third possible implementation manner, the method further includes:
sending, by the UE, a first uplink data packet to the base station; and
sending, by the UE, a second uplink data packet to the wifi AP, so that the wifi AP sends the second uplink data packet to the base station.

With reference to the third possible implementation manner of the fifth aspect, in a fourth possible implementation manner, before the sending, by the UE, a second uplink data packet to the wifi AP, the method further includes:
adding, by the UE, the mapping relationship between a radio bearer RB and a wifi access category AC to header information of the second data packet, so that the second uplink data packet can be transmitted by using the wireless local area network to which the wifi AP belongs.

With reference to the third or fourth possible implementation manner of the fifth aspect, in a fifth possible implementation manner, the method further includes:
receiving, by the UE, a second retransmission indication message sent by the wifi AP, where the second retransmission indication message is generated by the wifi AP after the wifi AP determines that the second uplink data packet is not sent successfully within a preset time, and the second retransmission indication message includes a data packet identifier of a data packet that needs to be retransmitted; and
sending, by the UE to the base station according to the second retransmission indication message, the data packet corresponding to the data packet identifier.

With reference to the second possible implementation manner of the fifth aspect, in a sixth possible implementation manner, the method further includes:
receiving, by the UE, a primary channel indication message sent by the base station, where the primary channel indication message includes a channel number of a primary channel determined by the wifi AP.

With reference to the second possible implementation manner of the fifth aspect, in a seventh possible implementation manner, the method further includes:
receiving, by the UE, a channel addition indication message sent by the base station, where the channel addition indication message includes a channel number of a to-be-added channel determined by the wifi AP; or
receiving, by the UE, a channel deletion indication message sent by the base station, where the channel deletion indication message includes a channel number of a to-be-deleted channel determined by the wifi AP.

With reference to the second possible implementation manner of the fifth aspect, in an eighth possible implementation manner, the method further includes:
receiving, by the UE, an indication message for deactivating a wifi channel, where the indication message for deactivating the wifi channel is sent by the base station and includes a channel number of the to-be-deactivated wifi channel; or
receiving, by the UE, an indication message for activating wifi channel, where the indication message for activating the wifi channel is sent by the base station and includes a channel number of the to-be-activated wifi channel.

With reference to the second possible implementation manner of the fifth aspect, in a ninth possible implementation manner, the method further includes:
receiving, by the UE, a wifi channel sequence indication message sent by the base station; and
receiving or sending, by the UE, data by using the wifi channel and by using a sequence determined by the base station.

With reference to the second possible implementation manner of the fifth aspect, in a tenth possible implementation manner, the method further includes:
determining, by the UE, a size of the second uplink data packet according to load of a wifi channel and/or strength of a wifi signal.

According to a sixth aspect, an aspect of the present invention provides a data transmission method, including:
receiving, by a Wireless Fidelity access point wifi AP, a second downlink data packet that is sent by a base station through an Xw interface; and
sending, by the wifi AP, the second downlink data packet to user equipment UE;
where the Xw interface is used by the base station to manage a wifi radio resource.

In a first possible implementation manner of the sixth aspect, header information of the second downlink data packet includes a mapping relationship between a radio bearer RB of a cellular network and a wifi access category AC of a wireless local area network, and the mapping relationship is used to enable the second downlink data packet to be transmitted by using the wireless local area network to which the wifi AP belongs.

With reference to the sixth aspect or the first possible implementation manner of the sixth aspect, in a second possible implementation manner, the method further includes:
receiving, by the wifi AP, a request message for adding a wifi secondary cell wifiSCell that is sent by the base station, where the request message for adding a wifiscell includes information about a communication adaptation layer and at least one of the following: a quantity of required channels, a channel number, a channel frequency, and channel bandwidth information, where the information about the communication adaptation layer includes the mapping relationship from a radio bearer RB of a cellular network to a wifi access category AC of a wireless local area network; or
receiving, by the wifi AP, a request message for deleting a wifiSCell that is sent by the base station, where the request message for deleting a wifiSCell includes at least one of the following: a quantity of required channels, a channel number, a channel frequency, and channel bandwidth information, and sending, by the wifi AP, a response message for deleting a wifiSCell to the base station.

With reference to the second possible implementation manner of the sixth aspect, in a third possible implementation manner, the method further includes:
receiving, by the wifi AP, an Xw interface establishment request sent by the base station, where the Xw interface establishment request carries at least one of the following: a base station identifier of the base station, a General Packet Radio Service Tunneling Protocol-User Plane tunnel endpoint identifier GTP-U TEID of the base station, an Internet Protocol IP address of the base station, and a Media Access Control MAC address of the base station; and
sending, by the wifi AP, an Xw interface establishment response to the base station, where the Xw interface establishment response carries at least one of the following: an AP identifier of the wifi AP, a GTP-U TEID of the wifi AP, an IP address of the wifi AP, and a MAC address of the wifi AP.

With reference to the sixth aspect, or any one of the first to third possible implementation manners of the sixth aspect, in a fourth possible implementation manner, the method further includes:
receiving, by the wifi AP, a second uplink data packet sent by the UE; and
sending, by the wifi AP, the second uplink data packet to the base station.

With reference to the sixth aspect, or any one of the first to fourth possible implementation manners of the sixth aspect, in a fifth possible implementation manner, the method further includes:
when the wifi AP determines that the second downlink data packet is not successfully sent to the UE within a preset time, sending, by the wifi AP, a first retransmission indication message to the base station, where the first retransmission indication message includes a data packet identifier of a data packet that needs to be retransmitted, so that the base station sends, to the UE, the data packet corresponding to the data packet identifier.

With reference to the fifth possible implementation manner of the sixth aspect, in a sixth possible implementation manner, the method further includes:
when the wifi AP determines that the second uplink data packet is not successfully sent to the base station within a preset time, sending, by the wifi AP, a second retransmission indication message to the UE, where the second retransmission indication message includes a data packet identifier of a data packet that needs to be retransmitted, so that the UE sends, to the base station, the data packet corresponding to the data packet identifier.

With reference to the second possible implementation manner of the sixth aspect, in a seventh possible implementation manner, the method further includes:
receiving, by the wifi AP, a primary channel negotiation message sent by the base station; and
sending, by the wifi AP, a primary channel negotiation response message to the base station, where the primary channel negotiation response message includes a channel number of a primary channel determined by the wifi AP.

With reference to the seventh possible implementation manner of the sixth aspect, in an eighth possible implementation manner, the method further includes:
receiving, by the wifi AP, a channel addition request message sent by the base station, where the channel addition request message includes a channel number of a to-be-added channel; or
receiving, by the wifi AP, a channel deletion request message sent by the base station, where the channel deletion request message includes a channel number of a to-be-deleted channel.

With reference to the seventh possible implementation manner of the sixth aspect, in a ninth possible implementation manner, the request message for adding a wifi secondary cell wifiSCell that is sent by the base station and received by the wifi AP further includes:
a MAC address of the UE, capability information of the UE, context information of the UE, and radio bearer RB identifier information and corresponding QoS information of the second data packet; and
the method further includes:
   sending, by the wifi AP to the base station, a response message for adding a wifiSCell, where the response message for adding a wifiSCell includes: capability information of the wifi AP.

According to a seventh aspect, an aspect of the present invention provides a base station, including:
a receiver, configured to receive a downlink data packet sent by a core network device; and
a transmitter, configured to send a first downlink data packet in the downlink data packet to user equipment UE, and send a second downlink data packet in the downlink data packet to a Wireless Fidelity access point wifi AP through an Xw interface, so that the wifi AP sends the second downlink data packet to the UE, where the base station manages a wifi radio resource by using the Xw interface.

In a first possible implementation manner of the seventh aspect, the method further includes:
a processor, configured to establish a communication adaptation layer between the base station and the wifi AP, where the communication adaptation layer is used to establish a mapping relationship from a radio bearer RB of a cellular network to a wifi access category AC of a wireless local area network.

With reference to the first possible implementation manner of the seventh aspect, in a second possible implementation manner, the transmitter is further configured to:
send, to the wifi AP, a request message for adding a wifi secondary cell wifiSCell, and send, to the user equipment UE, a configuration message for adding a wifi secondary cell wifiSCell, where the request message for adding a wifiscell or the configuration message for adding a wifiSCell includes information about the communication adaptation layer and at least one of the following: a quantity of required channels, a channel number, a channel frequency, and a channel bandwidth; or
send a request message for deleting a wifiSCell to the wifi AP and send an indication message for deleting a wifiscell to the UE, where the request message for deleting a wifiSCell or the wifiscell indication message includes at least one of the following: a quantity of required channels, a channel number, a channel frequency, and a channel bandwidth.

With reference to the first possible implementation manner of the seventh aspect, in a third possible implementation manner, the communication adaptation layer is used to add the mapping relationship between a radio bearer RB and a wifi access category AC to header information of the second downlink data packet, so that the second downlink data packet can be transmitted by using the wireless local area network to which the wifi AP belongs.

In a fourth possible implementation manner of the seventh aspect, the transmitter is further configured to send an Xw interface establishment request to the wifi AP, where the Xw interface establishment request carries the following information: a General Packet Radio Service Tunneling Protocol-User Plane tunnel endpoint identifier GTP-U TEID of the base station and a Media Access Control MAC address of the base station; and
the receiver is further configured to receive an Xw interface establishment response sent by the wifi AP, where the Xw interface establishment response carries the following information: a GTP-U TEID of the wifi AP and a MAC address of the wifi AP.

With reference to the third possible implementation manner of the seventh aspect, in a fifth possible implementation manner,
the receiver is further configured to receive a first uplink data packet sent by the UE; and receive a second uplink data packet sent by the wifi AP;
the processor is further configured to combine the first uplink data packet and the second uplink data packet into an uplink data packet; and
the transmitter is further configured to send the uplink data packet to the core network device.

With reference to the fifth possible implementation manner of the seventh aspect, in a sixth possible implementation manner, the processor is specifically configured to:
remove, from the second data packet, header information that includes the mapping relationship between a radio bearer RB and a wifi access category AC, so that the second data packet is converted to have a format applicable to the cellular network; and
reorder the second data packet and the first data packet, to form the uplink data packet.

With reference to the seventh aspect, or any one of the first to sixth possible implementation manners of the seventh aspect, in a seventh possible implementation manner,
the receiver is further configured to receive a first retransmission indication message sent by the wifi AP, where the first retransmission indication message is generated by the wifi AP after the wifi AP determines that the second downlink data packet is not sent successfully within a preset time, and the first retransmission indication message includes a data packet identifier of a data packet that needs to be retransmitted; and
the transmitter is further configured to send, to the UE according to the first retransmission indication message, the data packet corresponding to the data packet identifier.

With reference to the first or second possible implementation manner of the seventh aspect, in an eighth possible implementation manner, the transmitter is further configured to:
send a primary channel negotiation message to the wifi AP, where the required channel determined by the base station includes the primary channel; and
send a primary channel indication message to the UE, where the primary channel indication message includes a channel number of a primary channel determined by the wifi AP.

With reference to the first or second possible implementation manner of the seventh aspect, in a ninth possible implementation manner, the transmitter is further configured to:
send a channel addition request message to the wifi AP, where the channel addition request message includes a channel number of a to-be-added channel, and the required channel determined by the base station includes the to-be-added channel; and
send a channel addition indication message to the UE, where the channel addition indication message includes a channel number of the to-be-added channel determined by the wifi AP.

With reference to the first or second possible implementation manner of the seventh aspect, in a tenth possible implementation manner, the transmitter is further configured to:
send a channel deletion request message to the wifi AP, where the channel deletion request message includes a channel number of a to-be-deleted channel; and
send a channel deletion indication message to the UE, where the channel deletion indication message includes a channel number of the to-be-deleted channel determined by the wifi AP.

With reference to the first or second possible implementation manner of the seventh aspect, in an eleventh possible implementation manner, the transmitter is further configured to:
send an indication message for deactivating a wifi channel to the UE, where the indication message for deactivating the wifi channel includes a channel number of the to-be-deactivated wifi channel; or
send an indication message for activating a wifi channel to the UE, where the indication message for activating the wifi channel includes a channel number of the to-be-activated wifi channel.

With reference to the first or second possible implementation manner of the seventh aspect, in a twelfth possible implementation manner, the transmitter is further configured to:
send a wifi channel sequence indication message to the UE, so that the UE receives or sends data by using the wifi channel and by using a sequence determined by the base station.

With reference to the seventh aspect or the first or second possible implementation manner of the seventh aspect, in a thirteenth possible implementation manner, the processor is further configured to:
determine a size of the second downlink data packet according to load of a wifi channel and/or strength of a wifi signal.

With reference to the second possible implementation manner of the seventh aspect, in a fourteenth possible implementation manner, the wifiSCell request message sent by the transmitter further includes:
a MAC address of the UE, capability information of the UE, context information of the UE, and radio bearer RB identifier information and corresponding QoS information of the second data packet; and
the receiver is further configured to receive a response message for adding a wifiSCell that is sent by the wifi AP, where the response message for adding a wifiSCell includes: capability information of the wifi AP.

According to an eighth aspect, an aspects of the present invention provides user equipment UE, including:
a receiver, configured to receive a first downlink data packet sent by a base station; and receive a second downlink data packet sent by a Wireless Fidelity access point wifi AP; and
a processor, configured to combine the first downlink data packet and the second downlink data packet into a downlink data packet,
where the second downlink data packet is sent by the base station to the wifi AP through an Xw interface, and the Xw interface is used by the base station to manage a wifi radio resource.

In a first possible implementation manner of the eighth aspect, header information of the second downlink data packet includes a mapping relationship between a radio bearer RB of a cellular network and a wifi access category AC of a wireless local area network, and the mapping relationship between a radio bearer RB of a cellular network and a wifi access category AC of a wireless local area network enables the second downlink data packet to be applicable to the wireless local area network to which the wifi AP belongs; and
the processor is specifically configured to:
remove, from the second downlink data packet and according to information about a communication adaptation layer, the header information that includes the mapping relationship between a radio bearer RB and a wifi access category AC, so that the second data packet is converted to be applicable to the cellular network to which the base station belongs; and
reorder the first downlink data packet and the second downlink data, to form a downlink data packet.

With reference to the first possible implementation manner of the eighth aspect, in a second possible implementation manner, the receiver is further configured to:
receive a configuration message for adding a wifi secondary cell wifiSCell that is sent by the base station, where the configuration message for adding a wifiSCell includes the information about the communication adaptation layer and at least one of the following: a quantity of required channels, a channel number, a channel frequency, and channel bandwidth information, and the information about the communication adaptation layer includes the mapping relationship, established by the base station, from a radio bearer RB to a wifi access category AC; or
receive an indication message for deleting a wifiSCell that is sent by the base station, where the indication message for deleting a wifiSCell includes at least one of the following: a quantity of required channels, a channel number, a channel frequency, and channel bandwidth information.

With reference to the eighth aspect or the first or second possible implementation manner of the second aspect, in a third possible implementation manner, the UE further includes a transmitter, configured to:
send a first uplink data packet to the base station; and
send a second uplink data packet to the wifi AP, so that the wifi AP sends the second uplink data packet to the base station.

With reference to the third possible implementation manner of the eighth aspect, in a fourth possible implementation manner, the processor is further configured to:
add the mapping relationship between a radio bearer RB and a wifi access category AC to header information of the second data packet, so that the second uplink data packet can be transmitted by using the wireless local area network to which the wifi AP belongs.

With reference to the third or fourth possible implementation manner of the eighth aspect, in a fifth possible implementation manner,
the receiver is further configured to receive a second retransmission indication message sent by the wifi AP, where the second retransmission indication message is generated by the wifi AP after the wifi AP determines that the second uplink data packet is not sent successfully within a preset time, and the second retransmission indication message includes a data packet identifier of a data packet that needs to be retransmitted; and
the transmitter is further configured to send, to the base station according to the second retransmission indication message, the data packet corresponding to the data packet identifier.

With reference to the second possible implementation manner of the eighth aspect, in a sixth possible implementation manner, the receiver is further configured to:
receive a primary channel indication message sent by the base station, where the primary channel indication message includes a channel number of a primary channel determined by the wifi AP.

With reference to the second possible implementation manner of the eighth aspect, in a seventh possible implementation manner, the receiver is further configured to:
receive a channel addition indication message sent by the base station, where the channel addition indication message includes a channel number of a to-be-added channel determined by the wifi AP; or
receive a channel deletion indication message sent by the base station, where the channel deletion indication message includes a channel number of a to-be-deleted channel determined by the wifi AP.

With reference to the second possible implementation manner of the eighth aspect, in an eighth possible implementation manner, the receiver is further configured to:
receive an indication message for deactivating a wifi channel, where the indication message for deactivating the wifi channel is sent by the base station and includes a channel number of the to-be-deactivated wifi channel; or
receive an indication message for activating a wifi channel, where the indication message for activating the wifi channel is sent by the base station and includes a channel number of the to-be-activated wifi channel.

With reference to the second possible implementation manner of the eighth aspect, in a ninth possible implementation manner, the receiver is further configured to:
receive a wifi channel sequence indication message sent by the base station; and
the receiving module or the sending module is specifically configured to send or receive data by using the wifi channel and by using a sequence determined by the base station.

With reference to the second possible implementation manner of the eighth aspect, in a tenth possible implementation manner, the processor is further configured to:
determine a size of the second uplink data packet according to load of a wifi channel and/or strength of a wifi signal.

According to a ninth aspect, an aspect of the present invention provides a Wireless Fidelity access point wifi AP, including:
a receiver, configured to receive a second downlink data packet that is sent by a base station through an Xw interface; and
a transmitter, configured to send the second downlink data packet to user equipment UE,
where the Xw interface is used by the base station to manage a wifi radio resource.

In a first possible implementation manner of the ninth aspect, header information of the second downlink data packet includes a mapping relationship between a radio bearer RB of a cellular network and a wifi access category AC of a wireless local area network, and the mapping relationship is used to enable the second downlink data packet to be transmitted by using the wireless local area network to which the wifi AP belongs.

With reference to the ninth aspect or the first possible implementation manner of the ninth aspect, in a second possible implementation manner, the receiver is further configured to:
receive a request message for adding a wifi secondary cell wifiSCell that is sent by the base station, where the request message for adding a wifiSCell includes information about a communication adaptation layer and at least one of the following: a quantity of required channels, a channel number, a channel frequency, and channel bandwidth information, and the information about the communication adaptation layer includes a mapping relationship from a radio bearer RB of a cellular network to a wifi access category AC of a wireless local area network; or
receive a request message for deleting a wifiSCell that is sent by the base station, where the request message for deleting a wifiSCell includes at least one of the following: a quantity of required channels, a channel number, a channel frequency, and channel bandwidth information, and the wifi AP sends a response message for deleting a wifiSCell to the base station.

With reference to the second possible implementation manner of the ninth aspect, in a third possible implementation manner, the receiver is further configured to receive an Xw interface establishment request sent by the base station, where the Xw interface establishment request carries at least one of the following: a base station identifier of the base station, a General Packet Radio Service Tunneling Protocol-User Plane tunnel endpoint identifier GTP-U TEID of the base station, an Internet Protocol IP address of the base station, and a Media Access Control MAC address of the base station; and
the transmitter is further configured to send an Xw interface establishment response to the base station, where the Xw interface establishment response carries at least one of the following: an AP identifier of the wifi AP, a GTP-U TEID of the wifi AP, an IP address of the wifi AP, and a MAC address of the wifi AP.

With reference to the ninth aspect, or any one of the first to third possible implementation manners of the ninth aspect, in a fourth possible implementation manner,
the receiver is further configured to receive a second uplink data packet sent by the UE; and
the transmitter is further configured to send the second uplink data packet to the base station.

With reference to the ninth aspect, or any one of the first to fourth possible implementation manners of the ninth aspect, in a fifth possible implementation manner,
the transmitter is further configured to: when the wifi AP determines that the second downlink data packet is not successfully sent to the UE within a preset time, the wifi AP sends a first retransmission indication message to the base station, where the first retransmission indication message includes a data packet identifier of a data packet that needs to be retransmitted, so that the base station sends, to the UE, the data packet corresponding to the data packet identifier.

With reference to the fifth possible implementation manner of the ninth aspect, in a sixth possible implementation manner,
the transmitter is further configured to: when the wifi AP determines that the second uplink data packet is not successfully sent to the base station within a preset time, the wifi AP sends a second retransmission indication message to the UE, where the second retransmission indication message includes a data packet identifier of a data packet that needs to be retransmitted, so that the UE sends, to the base station, the data packet corresponding to the data packet identifier.

With reference to the second possible implementation manner of the ninth aspect, in a seventh possible implementation manner,
the receiver is further configured to receive a primary channel negotiation message sent by the base station; and
the transmitter is further configured to send a primary channel negotiation response message to the base station, where the primary channel negotiation response message includes a channel number of a primary channel determined by the wifi AP.

With reference to the seventh possible implementation manner of the ninth aspect, in an eighth possible implementation manner, the receiver is further configured to:
receive a channel addition request message sent by the base station, where the channel addition request message includes a channel number of a to-be-added channel; or
receive a channel deletion request message sent by the base station, where the channel deletion request message includes a channel number of a to-be-deleted channel.

With reference to the seventh possible implementation manner of the ninth aspect, in a ninth possible implementation manner, the request message for adding a wifi secondary cell wifiSCell that is sent by the base station and received by the wifi AP further includes:
a MAC address of the UE, capability information of the UE, context information of the UE, and radio bearer RB identifier information and corresponding QoS information of the second data packet; and
the transmitter is further configured to:
   send, to the base station, a response message for adding a wifiSCell, where the response message for adding a wifiSCell includes: capability information of the wifi AP.

In the data transmission apparatus and method provided in the embodiments of the present invention, a base station sends a first downlink data packet in a downlink data packet to user equipment UE, and sends a second downlink data packet in the downlink data packet to a Wireless Fidelity access point wifi AP, so that the wifi AP sends the second downlink data packet to the UE, This implements data offloading at a granularity of a data packet, so that a cellular radio resource and a wifi radio resource are coordinated at a granularity of a data packet, thereby improving radio resource utilization.

### BRIEF DESCRIPTION OF DRAWINGS

FIG. 1 is a schematic diagram of a network structure for a manner in which offloading is performed by a PGW in the prior art;
FIG. 2 is a schematic diagram of a network structure for a manner in which offloading is performed by a base station according to an embodiment of the present invention;
FIG. 3 is a schematic structural diagram of Embodiment 1 of a data transmission apparatus according to the present invention;
FIG. 4 is a schematic structural diagram of Embodiment 2 of a data transmission apparatus according to the present invention;
FIG. 5 is a schematic structural diagram of Embodiment 3 of a data transmission apparatus according to the present invention;
FIG. 6 is a schematic structural diagram of Embodiment 4 of a data transmission apparatus according to the present invention;
FIG. 7 is a schematic structural diagram of Embodiment 5 of a data transmission apparatus according to the present invention;
FIG. 8 is a flowchart of Embodiment 1 of a data transmission method according to the present invention;
FIG. 9 is a flowchart of a method for establishing an Xw interface between a base station and a wifi AP in the embodiment shown in FIG. 8;
FIG. 10 is a flowchart of adding a wifi secondary cell wifiSCell by a base station based on FIG. 9;
FIG. 11 is a flowchart of performing retransmission by a base station based on Embodiment 1 of the data transmission method shown in FIG. 8;
FIG. 12 is a flowchart of Embodiment 2 of a data transmission method according to the present invention;
FIG. 13 is a flowchart of Embodiment 3 of a data transmission method according to the present invention;
FIG. 14 is a flowchart of Embodiment 4 of a data transmission method according to the present invention;
FIG. 15 is a flowchart of Embodiment 5 of a data transmission method according to the present invention;
FIG. 16 is a flowchart of Embodiment 6 of a data transmission method according to the present invention;
FIG. 17A and FIG. 17B are a signaling flowchart of Embodiment 7 of a data transmission method according to the present invention;
FIG. 18 is a schematic structural diagram of an embodiment of a base station according the present invention;
FIG. 19 is a schematic structural diagram of an embodiment of UE according to the present invention;
FIG. 20 is a schematic structural diagram of an embodiment of a wifi AP according to the present invention; and
FIG. 21 is a schematic structural diagram of an embodiment of a communications system according the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

The technical solutions of the present invention may be applied to various communications systems, such as: a Global System for Mobile Communications (Global System of Mobile communication, GSM for short), a Code Division Multiple Access (Code Division Multiple Access, CDMA for short) system, a Wideband Code Division Multiple Access (Wideband Code Division Multiple Access, WCDMA for short) system, a general packet radio service (General Packet Radio Service, GPRS for short), a Long Term Evolution (Long Term Evolution, LTE for short) system, a Long Term Evolution Advanced (Advanced long term evolution, LTE-A for short) system, and a Universal Mobile Telecommunications System (Universal Mobile Telecommunication System, UMTS for short).

In the embodiments of the present invention, a base station may be a base transceiver station (Base Transceiver Station, BTS for short) in the GSM or CDMA, may also be a NodeB (NodeB, NB for short) in the WCDMA, and may further be an evolved NodeB (Evolutional Node B, eNB or e-NodeB for short) in the LTE, or a relay, which is not limited in the present invention. An identifier of the base station may be: a base station identifier, a General Packet Radio Service (General Packet Radio Service, GPRS for short) Tunnelling Protocol-User Plane tunnel endpoint identifier (GPRS Tunnelling Protocol-User Tunnel Endpoint Identifier, GTP-U TEID for short), an Internet Protocol (Internet Protocol, IP for short) address, or a Media Access Control MAC (Media Access Control, MAC for short) address.

In the embodiments of the present invention, user equipment (User Equipment, UE for short) includes but is not limited to a mobile station (Mobile Station, MS for short), a mobile terminal (Mobile Terminal), a mobile telephone (Mobile Telephone), a handset (handset), portable equipment (portable equipment), and the like. The user equipment may communicate with one or more core networks by using a radio access network (Radio Access Network, RAN for short). For example, the user equipment may be a mobile telephone (or referred to as a "cellular" telephone), or a computer having a wireless communication function; the user equipment may further be a portable, a pocket-sized, a handheld, a computer built-in, or an in-vehicle mobile apparatus.

In the prior art, when UE performs wireless communication with a cellular network and wifi at the same time, data offloading and merging usually occur on a core network device, for example, a PGW in a core network EPC (evolved packet core), data offloading performed by the core network device is limited only to a service level, and data cannot be offloaded at a data packet level, that is, data packets belonging to a same service can be transmitted by using only one type of radio resource, and data offloading has a relatively rough granularity. When one service includes a relatively large quantity of data packets while another service includes only a data packet having a very small data volume, for offloading in the prior art, the best thing that can be done is to offload the service having a large data volume to one RAT that is named, for example, RAT1, and offload the service having a small data volume to another RAT that is named, for example, RAT2. In this case, a state in which the RAT1 is congested while the RAT2 is idle and a resource of the RAT2 cannot be fully utilized may occur.

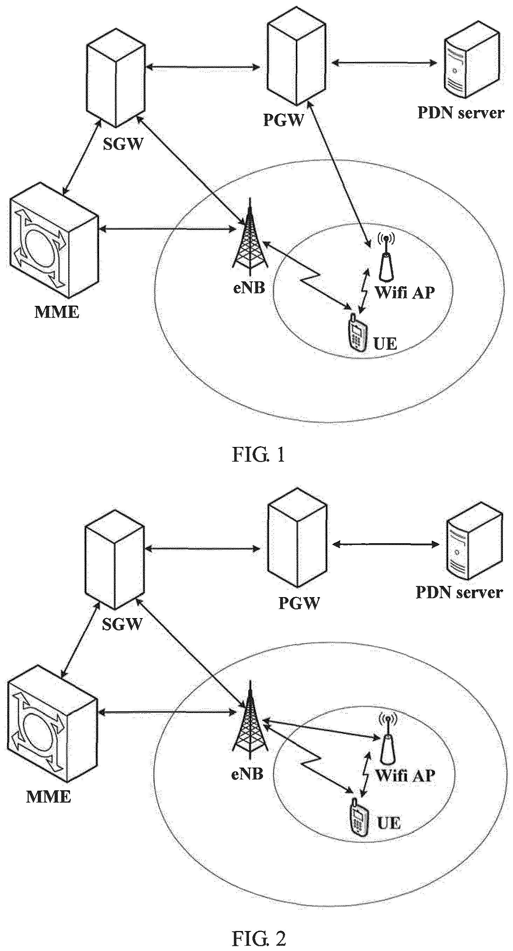

FIG. 1 is a schematic diagram of a network structure for a manner in which offloading is performed by a PGW in the prior art. As shown in FIG. 1, a wifi AP is connected to a PGW of a 3GPP core network, and the PGW serves as an anchor for offloading to wifi. In a trusted (trusted) manner, the wifi AP may directly access the PGW by using an s2a interface; and in an un-trusted manner (un-trusted), the wifi AP accesses the PGW by using an s2b interface between an evolved packet data gateway (ePDG, evolved packet data gateway) and the PGW, where in FIG. 1, an ePDG network element is omitted.

FIG. 2 is a schematic diagram of a network structure for a manner in which offloading is performed by a base station according to an embodiment of the present invention, and as shown in FIG. 2, a base station eNB serves as an anchor for offloading to wifi. When UE is in a radio resource control connected mode (RRC_CONNECTED) in a cellular network and is associated with a wifi access point, it is equivalent to performing inter-system carrier aggregation CA (carrier aggregation) between the cellular network and wifi.

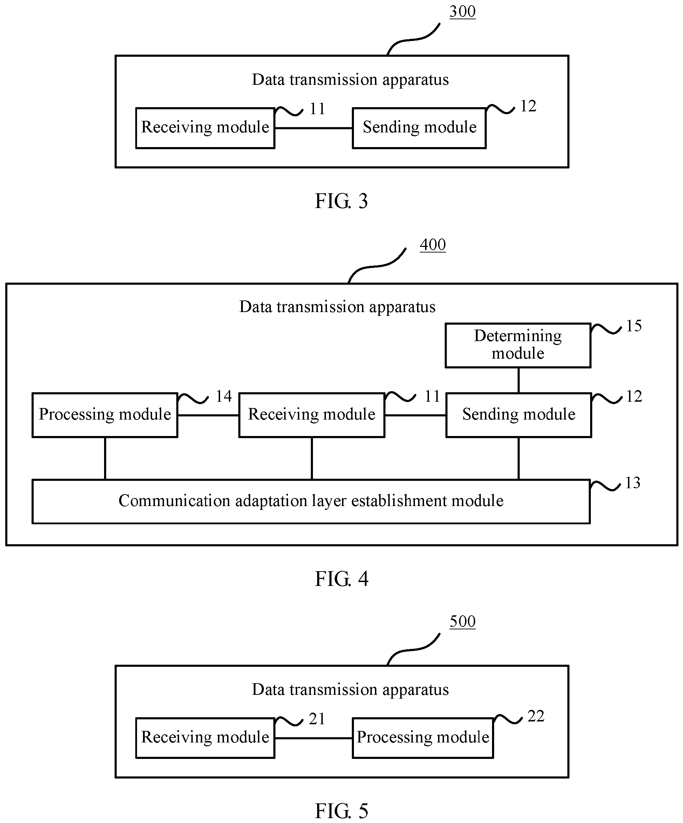

FIG. 3 is a schematic structural diagram of Embodiment 1 of a data transmission apparatus according to the present invention. A data transmission apparatus 300 of this embodiment may be disposed on a base station, or may be a base station. As shown in FIG. 3, the apparatus of this embodiment may include: a receiving module 11 and a sending module 12, where
the receiving module 11 may be configured to receive a downlink data packet sent by a core network device; and
the sending module 12 may be configured to send a first downlink data packet in the downlink data packet to user equipment UE, and send a second downlink data packet in the downlink data packet to a Wireless Fidelity access point wifi AP through an Xw interface, so that the wifi AP sends the second downlink data packet to the UE, and the base station manages a wifi radio resource by using the Xw interface.

During specific implementation, before sending the second downlink data packet to the wifi AP by using the sending module, the base station may add, to the second downlink data packet, header information that includes a mapping relationship between a radio bearer (Wireless Bearer, RB for short) and a wifi access category (Access Category, AC for short), so that the second downlink data packet can be transmitted by using a wifi network. Specifically, the wifi AP may establish a communication adaptation layer between a wifi radio network and a cellular radio network in advance, that is, establish mapping relationships between all RBs of the base station and wifi ACs. In this case, after receiving the second downlink data packet that is sent by the base station and that includes the header information including the mapping relationship between an RB and a wifi AC, the wifi AP identifies the wifi AC corresponding to the second downlink data packet, sets a wifi transmission parameter according to the wifi AC, and sends the second downlink data packet to the UE. More specifically, a manner for transmitting the second downlink data packet by using a wifi network may be: The wifi AP may use the second downlink data packet as a wifi Media Access Control (Media Access Control, MAC for short) service data unit (MAC Service Data Unit, MSDU for short), further generate a MAC protocol data unit (MAC Protocol Data Unit, MPDU for short) at a wifi MAC layer and generate a physical protocol data unit (Physical Protocol Data Unit, PPDU for short) at a physical layer, and send the MAC protocol data unit and the physical protocol data unit to the UE.

Correspondingly, after receiving the first downlink data packet and the second downlink data packet, the UE may delete, from the second downlink data packet, the header information that includes the mapping relationship between an RB and a wifi AC, so that the first downlink data packet and the second downlink data packet can be combined, thereby completing transmission of downlink data. The foregoing header information deletion is completed by an adaption layer, of the UE, corresponding to a wifi protocol stack or an adaption layer, of the UE, corresponding to an LTE protocol stack, so as to perform adaptation of a data packet format, so that the UE can combine data packets.

Correspondingly, for uplink data packets, the base station may receive a first uplink data packet sent by the UE and a second uplink data packet sent by the wifi AP, and may delete, from the second uplink data packet, header information that includes the mapping relationship between an RB and a wifi AC, so that the first uplink data packet and the second uplink data packet can be combined into an uplink data packet; and then the base station sends the uplink data packet to the core network device, to complete transmission of uplink data. The foregoing header information deletion is completed by an adaptation layer of the wifi AP or an adaptation layer of the base station, so as to perform adaptation a data packet format, so that the base station can combine data packets.

Compared with the manner shown in FIG. 1 in which offloading is performed by a PGW in the prior art, and offloading is limited only to a service level, the base station in this embodiment can split a downlink data packet into a first downlink data packet and a second downlink data packet that are separately sent to the UE directly and to the UE through a wifi AP, that is, data offloading is performed by the base station. The base station may split a data packet, that is, offloading can be performed at a data packet level, achieving a finer offloading granularity, and therefore, utilization of a cellular radio resource and a wifi radio resource can be coordinated at a finer granularity.

In this embodiment, a base station sends a first downlink data packet in a downlink data packet to user equipment UE, and sends a second downlink data packet in the downlink data packet to a Wireless Fidelity access point wifi AP, so that the wifi AP sends the second downlink data packet to the UE. This implements data offloading at a granularity of a data packet, so that a cellular radio resource and a wifi radio resource are coordinated at a granularity of a data packet, thereby improving radio resource utilization.

Based on the data transmission apparatus 300, during specific implementation, the following multiple optional implementation solutions may also be used, which are described in detail below.

FIG. 4 is a schematic structural diagram of Embodiment 2 of a data transmission apparatus according to the present invention. A data transmission apparatus 400 of this embodiment may be disposed on a base station, or may be a base station. As shown in FIG. 4, based on the apparatus shown in FIG. 3, the apparatus of this embodiment may further include: a communication adaptation layer establishment module 13, configured to establish a communication adaptation layer between the base station and the wifi AP, where the communication adaptation layer is used to establish a mapping relationship from a radio bearer RB of a cellular network to a wifi access category AC of a wireless local area network.

Further, the communication adaptation layer may be used to add the mapping relationship between a radio bearer RB and a wifi access category AC to header information of the second downlink data packet, so that the second downlink data packet can be transmitted by using the wireless local area network to which the wifi AP belongs.

Further optionally, the sending module 12 may be further configured to:
send, to the wifi AP, a request message for adding a wifi secondary cell wifiSCell, and send, to the user equipment UE, a configuration message for adding a wifi secondary cell wifiSCell, where the request message for adding a wifiscell or the configuration message for adding a wifiSCell includes information about the communication adaptation layer and at least one of the following: a quantity of required channels, a channel number, a channel frequency, and a channel bandwidth; or
send a request message for deleting a wifiSCell to the wifi AP and send an indication message for deleting a wifiscell to the UE, where the request message for deleting a wifiSCell or the wifiscell indication message includes at least one of the following: a quantity of required channels, a channel number, a channel frequency, and a channel bandwidth.

This optional solution has the following technical effect: The base station can establish a wifiSCell, and the second downlink data packet can be transmitted by using the wifiSCell; in addition, the base station can delete a wifiSCell; the base station implements management of a radio resource of the wifi AP by managing the wifiSCell.

Further optionally, the sending module 12 may be further configured to send an Xw interface establishment request to the wifi AP, where the Xw interface establishment request carries the following information: a General Packet Radio Service Tunneling Protocol-User Plane tunnel endpoint identifier GTP-U TEID of the base station and a Media Access Control MAC address of the base station; and
the receiving module 11 may be further configured to receive an Xw interface establishment response sent by the wifi AP, where the Xw interface establishment response carries the following information: a GTP-U TEID of the wifi AP and a MAC address of the wifi AP.

This optional solution has the following technical effect: The base station establishes an Xw interface, and uses the Xw interface for data and signaling transmission between the base station and the wifi AP, and in this way, the base station can manage a radio resource of the wifi AP by using the Xw interface.

Further optionally, the receiving module 11 may be further configured to receive a first uplink data packet sent by the UE; and receive a second uplink data packet sent by the wifi AP;
the apparatus may further include a processing module 14, configured to combine the first uplink data packet and the second uplink data packet into an uplink data packet; and
the sending module 12 may be further configured to send the uplink data packet to the core network device.

Further, the processing module 14 may be specifically configured to:
remove, from the second data packet, header information that includes the mapping relationship between a radio bearer RB and a wifi access category AC, so that the second data packet is converted to have a format applicable to the cellular network; and
reorder the second data packet and the first data packet, to form the uplink data packet.

This optional solution has the following technical effect: The base station is enabled to combine data from the UE and the wifi AP, so that uplink data is combined by the base station and then transmitted to the core network device.

Further optionally, the receiving module 11 may be further configured to receive a first retransmission indication message sent by the wifi AP, where the first retransmission indication message is generated by the wifi AP after the wifi AP determines that the second downlink data packet is not sent successfully within a preset time, and the first retransmission indication message includes a data packet identifier of a data packet that needs to be retransmitted; and
the sending module 12 may be further configured to send, to the UE according to the first retransmission indication message, the data packet corresponding to the data packet identifier.

This optional solution has the following technical effect: By means of a retransmission mechanism, when the wifi AP fails to transmit the second downlink data packet successfully within a preset time, the base station retransmits the second downlink data packet on behalf of the wifi AP, thereby ensuring a QoS requirement of a service.

Further optionally, the sending module 12 may be further configured to:
send a primary channel negotiation message to the wifi AP, where the required channel determined by the base station includes the primary channel; and
send a primary channel indication message to the UE, where the primary channel indication message includes a channel number of a primary channel determined by the wifi AP.

Further optionally, the sending module 12 may be further configured to:
send a channel addition request message to the wifi AP, where the channel addition request message includes a channel number of a to-be-added channel, and the required channel determined by the base station includes the to-be-added channel; and
send a channel addition indication message to the UE, where the channel addition indication message includes a channel number of the to-be-added channel determined by the wifi AP.

Further optionally, the sending module 12 may be further configured to:
send a channel deletion request message to the wifi AP, where the channel deletion request message includes a channel number of a to-be-deleted channel; and
send a channel deletion indication message to the UE, where the channel deletion indication message includes a channel number of the to-be-deleted channel determined by the wifi AP.

Further optionally, the sending module 12 may be further configured to:
send an indication message for deactivating a wifi channel to the UE, where the indication message for deactivating the wifi channel includes a channel number of the deactivated wifi channel; or
send an indication message for activating a wifi channel to the UE, where the indication message for activating the wifi channel includes a channel number of the activated wifi channel.

Further optionally, the sending module 12 may be further configured to:
send a wifi channel sequence indication message to the UE, so that the UE receives or sends data by using the wifi channel and by using a sequence determined by the base station.

The foregoing optional solution has the following technical effect: The base station is enabled to perform wifi channel management, such as primary channel negotiation, channel addition, channel deletion, channel activation, channel deactivation, and determining a channel using sequence, which further enhances a function of managing and scheduling a wifi radio resource by the base station.

Further optionally, the data transmission apparatus may further include:
a determining module 15, configured to determine a size of the second downlink data packet according to load of a wifi channel and/or strength of a wifi signal.

Further optionally, the wifiSCell request message sent by the sending module 12 may further include: a MAC address of the UE, capability information of the UE, context information of the UE, and radio bearer RB identifier information and corresponding QoS information of the second data packet; and
the receiving module 11 may be further configured to receive a response message for adding a wifiSCell that is sent by the wifi AP, where the response message for adding a wifiSCell includes: capability information of the wifi AP.

This optional solution has the following technical effect: In a process of adding a wifiSCell and deleting a wifiSCell, information for performing an operation on all channels of the wifi AP is carried, which implements a management function of adding or deleting all the channels of the wifi AP in batches.

FIG. 5 is a schematic structural diagram of Embodiment 3 of a data transmission apparatus according to the present invention. A data transmission apparatus 500 of this embodiment may be disposed on UE, or may be UE. As shown in FIG. 5, the apparatus of this embodiment may include: a receiving module 21 and a processing module 22, where
the receiving module 21 may be configured to receive a first downlink data packet sent by a base station; and receive a second downlink data packet sent by a Wireless Fidelity access point wifi AP; and
the processing module 22 may be configured to combine the first downlink data packet and the second downlink data packet into a downlink data packet;
where the second downlink data packet is sent by the base station to the wifi AP through an Xw interface, and the Xw interface is used by the base station to manage a wifi radio resource.

During specific implementation, the second downlink data packet is sent by the base station to the wifi AP in advance, and moreover, the base station adds, to the second downlink data packet, header information including a mapping relationship between a radio bearer RB and a wifi access category AC, so that the second downlink data packet can be transmitted by using a wireless local area network to which the wifi AP belongs.

Further optionally, the header information of the second downlink data packet includes the mapping relationship between a radio bearer RB of a cellular network and a wifi access category AC of a wireless local area network, and the mapping relationship between a radio bearer RB of a cellular network and a wifi access category AC of a wireless local area network enables the second downlink data packet to be applicable to the wireless local area network to which the wifi AP belongs; and
the processing module 22 is specifically configured to:
remove, from the second downlink data packet and according to information about a communication adaptation layer, the header information that includes the mapping relationship between a radio bearer RB and a wifi access category AC, so that the second data packet is converted to be applicable to the cellular network to which the base station belongs; and
reorder the first downlink data packet and the second downlink data, to form a downlink data packet.

Compared with the prior art in which offloading is limited only to a service level (refer to FIG. 1 and the foregoing description), this embodiment can implement offloading at a data packet level, achieving a finer offloading granularity. Therefore, radio resource utilization is higher.

In this embodiment, UE separately receives a first downlink data packet sent by a base station and a second downlink data packet sent by a wifi AP, and then combines the first downlink data packet and the second downlink data packet into a downlink data packet, to implement data offloading at a granularity of a data packet, so that a cellular radio resource and a wifi radio resource are coordinated at a granularity of a data packet, thereby improving radio resource utilization.

Further optionally, the receiving module 21 may be further configured to:
receive a configuration message for adding a wifiSCell that is sent by the base station, where the configuration message for adding a wifiSCell includes the information about the communication adaptation layer and at least one of the following: a quantity of required channels, a channel number, a channel frequency, and channel bandwidth information, and the information about the communication adaptation layer includes the mapping relationship, established by the base station, from a radio bearer RB to a wifi access category AC; or
receive an indication message for deleting a wifiSCell that is sent by the base station, where the indication message for deleting a wifiSCell includes at least one of the following: a quantity of required channels, a channel number, a channel frequency, and channel bandwidth information.

This optional solution has the following technical effect: The UE is enabled to acquire a message for adding a wifiSCell or deleting a wifiSCell by the base station, and the second downlink data packet can be transmitted by using the wifiSCell.

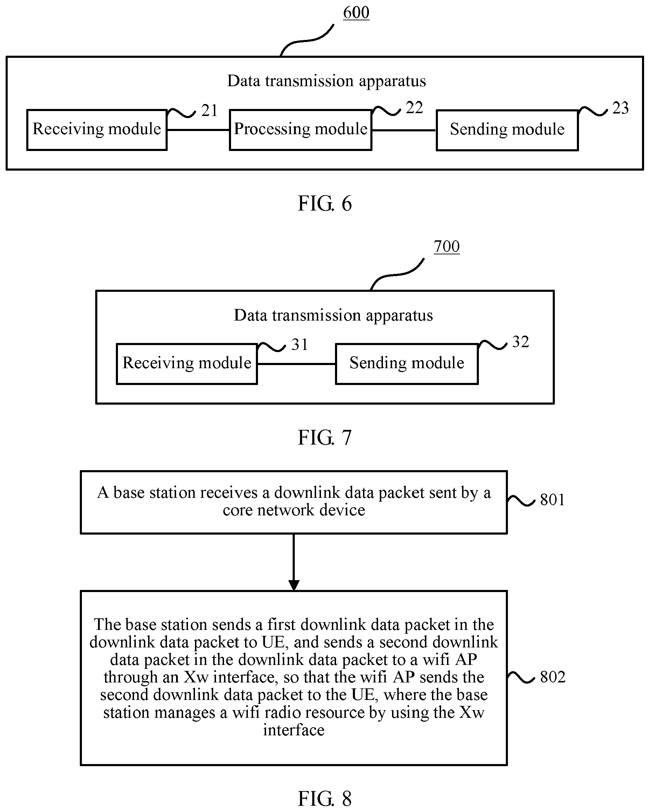

FIG. 6 is a schematic structural diagram of Embodiment 4 of a data transmission apparatus according to the present invention. A data transmission apparatus 600 of this embodiment may be disposed on UE, or may be UE. As shown in FIG. 6, based on the apparatus shown in FIG. 5, the apparatus of this embodiment may further include: a sending module 23, where the sending module 23 may be configured to:
send a first uplink data packet to the base station; and
send a second uplink data packet to the wifi AP, so that the wifi AP sends the second uplink data packet to the base station.

In this embodiment, a sending module sends a first uplink data packet to a base station, and sends a second uplink data packet to a wifi AP, so that the wifi AP sends the second uplink data packet to the base station, implementing that uplink data packets are sent by UE and the wifi AP and are combined on the base station, thereby improving radio resource utilization.

Further, the processing module 22 may be further configured to:
add, by the UE, the mapping relationship between a radio bearer RB and a wifi access category AC to header information of the second data packet, so that the second uplink data packet can be transmitted by using the wireless local area network to which the wifi AP belongs.

Further optionally, the receiving module 21 may be further configured to receive a second retransmission indication message sent by the wifi AP, where the second retransmission indication message is generated by the wifi AP after the wifi AP determines that the second uplink data packet is not sent successfully within a preset time, and the second retransmission indication message includes a data packet identifier of a data packet that needs to be retransmitted; and
the sending module 23 may be further configured to send, to the base station according to the second retransmission indication message, the data packet corresponding to the data packet identifier.

This optional solution has the following technical effect: By means of a retransmission mechanism, when the wifi AP fails to transmit the second uplink data packet successfully within a preset time, the UE retransmits the second uplink data packet on behalf of the wifi AP, thereby ensuring a QoS requirement of a service.

Further optionally, the receiving module 21 may be further configured to:
receive a primary channel indication message sent by the base station, where the primary channel indication message includes a channel number of a primary channel determined by the wifi AP.

Further optionally, the receiving module 21 may be further configured to:
receive a channel addition indication message sent by the base station, where the channel addition indication message includes a channel number of a to-be-added channel determined by the wifi AP; or
receive a channel deletion indication message sent by the base station, where the channel deletion indication message includes a channel number of a to-be-deleted channel determined by the wifi AP.

Further optionally, the receiving module 21 may be further configured to:
receive an indication message for deactivating a wifi channel, where the indication message for deactivating the wifi channel is sent by the base station and includes a channel number of the to-be-deactivated wifi channel; or
receive an indication message for activating a wifi channel, where the indication message for activating the wifi channel is sent by the base station and includes a channel number of the to-be-activated wifi channel.

Further optionally, the receiving module 21 may be further configured to:
receive a wifi channel sequence indication message sent by the base station; and
the receiving module or the sending module is specifically configured to send or receive data by using the wifi channel and by using a sequence determined by the base station.

The foregoing optional solution has the following technical effect: The base station is enabled to perform wifi channel management, such as primary channel negotiation, channel addition, channel deletion, channel activation, channel deactivation, and determining a channel using sequence, which further enhances a function of managing and scheduling a wifi radio resource by the base station.

Further optionally, the processing module 22 may be further configured to:
determine a size of the second uplink data packet according to load of a wifi channel and/or strength of a wifi signal.

This optional solution has the following technical effect: The UE can determine an offloading policy for an uplink data packet according to a real-time change in wifi radio resources, thereby improving radio resource utilization and ensuring QoS.

FIG. 7 is a schematic structural diagram of Embodiment 5 of a data transmission apparatus according to the present invention. A data transmission apparatus 700 of this embodiment may be disposed on a wifi AP, or may be a wifi AP. As shown in FIG. 7, the apparatus of this embodiment may include: a receiving module 31 and a sending module 32, where
the receiving module 31 is configured to receive a second downlink data packet that is sent by a base station through an Xw interface; and
the sending module 32 is configured to send the second downlink data packet to user equipment UE;
where the Xw interface is used by the base station to manage a wifi radio resource.

Further, header information of the second downlink data packet includes a mapping relationship between a radio bearer RB of a cellular network and a wifi access category AC of a wireless local area network, and the mapping relationship is used to enable the second downlink data packet to be transmitted by using the wireless local area network to which the wifi AP belongs.

Compared with the prior art in which offloading is limited only to a service level only (refer to FIG. 1 and the foregoing description), this embodiment can implement offloading at a data packet level, achieving a finer offloading granularity. Therefore, radio resource utilization is higher.

In this embodiment, a wifi AP receives, from a base station, a second downlink data packet in a downlink data packet, and forwards the second downlink data packet to UE, so that some downlink data is transmitted by using a wifi radio resource, and data offloading is performed at a granularity of a data packet; therefore, a cellular radio resource and a wifi radio resource are coordinated at a granularity of a data packet, thereby improving radio resource utilization.

Further, the receiving module 31 may be further configured to:
receive a request message for adding a wifi secondary cell wifiSCell that is sent by the base station, where the request message for adding a wifiSCell includes information about a communication adaptation layer and at least one of the following: a quantity of required channels, a channel number, a channel frequency, and channel bandwidth information, and the information about the communication adaptation layer includes a mapping relationship from a radio bearer RB of a cellular network to a wifi access category AC of a wireless local area network; or
receive a request message for deleting a wifiSCell that is sent by the base station, where the request message for deleting a wifiSCell includes at least one of the following: a quantity of required channels, a channel number, a channel frequency, and channel bandwidth information, and the wifi AP sends a response message for deleting a wifiSCell to the base station.

This optional solution has the following technical effect: The base station is enabled to send a message for adding a wifiSCell or deleting a wifiSCell, and the second downlink data packet can be transmitted by using the wifiSCell.

Further optionally, the receiving module 31 is further configured to receive an Xw interface establishment request sent by the base station, where the Xw interface establishment request carries at least one of the following: a base station identifier of the base station, a General Packet Radio Service Tunneling Protocol-User Plane tunnel endpoint identifier GTP-U TEID of the base station, an Internet Protocol IP address of the base station, and a Media Access Control MAC address of the base station; and
the sending module 32 is further configured to send an Xw interface establishment response to the base station, where the Xw interface establishment response carries at least one of the following: an AP identifier of the wifi AP, a GTP-U TEID of the wifi AP, an IP address of the wifi AP, and a MAC address of the wifi AP.

This optional solution has the following technical effect: An Xw interface is established between the base station and the wifi AP, and the Xw interface can be used for data and signaling transmission between the base station and the wifi AP, so that the base station can manage a radio resource of the wifi AP by using the Xw interface.

Further optionally, the receiving module 31 may be further configured to receive a second uplink data packet sent by the UE; and the sending module 32 may be further configured to send the second uplink data packet to the base station.

This optional solution has the following technical effect: It is implemented that uplink data packets are sent by the UE and the wifi AP, and are combined on the base station, thereby improving radio resource utilization.

Further optionally, the sending module 32 may be further configured to: when the wifi AP determines that the second downlink data packet is not successfully sent to the UE within a preset time, the wifi AP sends a first retransmission indication message to the base station, where the first retransmission indication message includes a data packet identifier of a data packet that needs to be retransmitted, so that the base station sends, to the UE, the data packet corresponding to the data packet identifier.

Further optionally, the sending module 32 may be further configured to: when the wifi AP determines that the second uplink data packet is not successfully sent to the base station within a preset time, the wifi AP sends a second retransmission indication message to the UE, where the second retransmission indication message includes a data packet identifier of a data packet that needs to be retransmitted, so that the UE sends, to the base station, the data packet corresponding to the data packet identifier.

This optional solution has the following technical effect: By means of a retransmission mechanism, when the wifi AP fails to transmit the second downlink data packet successfully within a preset time, the base station retransmits the second downlink data packet on behalf of the wifi AP; and when the wifi AP cannot transmit the second uplink data packet successfully within a preset time, the UE retransmits the second uplink data packet on behalf of the wifi AP, thereby ensuring a QoS requirement of a service.

Further optionally, the receiving module 31 may be further configured to receive a primary channel negotiation message sent by the base station; and the sending module 32 may be further configured to send a primary channel negotiation response message to the base station, where the primary channel negotiation response message includes a channel number of a primary channel determined by the wifi AP.

Further optionally, the receiving module 31 may be further configured to:
receive a channel addition request message sent by the base station, where the channel addition request message includes a channel number of a to-be-added channel; or
receive a channel deletion request message sent by the base station, where the channel deletion request message includes a channel number of a to-be-deleted channel.

The foregoing optional solution has the following technical effect: The base station is enabled to perform wifi channel management, such as primary channel negotiation, channel addition, channel deletion, and determining a channel using sequence, which further enhances a function of managing and scheduling a wifi radio resource by the base station.

Further optionally, the request message for adding a wifi secondary cell wifiSCell that is sent by the base station and received by the wifi AP may further include:
a MAC address of the UE, capability information of the UE, context information of the UE, and radio bearer RB identifier information and corresponding QoS information of the second data packet; and
the sending module 32 may be further configured to:
   send, to the base station, a response message for adding a wifiSCell, where the response message for adding a wifiSCell includes: capability information of the wifi AP.

This optional solution has the following technical effect: The UE can determine an offloading policy for an uplink data packet according to a real-time change in wifi radio resources, thereby improving radio resource utilization and ensuring QoS.

FIG. 8 is a flowchart of Embodiment 1 of a data transmission method according to the present invention, and this embodiment is executed by a base station. As shown in FIG. 8, the method of this embodiment may include:
Step 801: A base station receives a downlink data packet sent by a core network device.
Step 802: The base station sends a first downlink data packet in the downlink data packet to UE, and sends a second downlink data packet in the downlink data packet to a wifi AP through an Xw interface, so that the wifi AP sends the second downlink data packet to the UE, where the base station manages a wifi radio resource by using the Xw interface.

During specific implementation, before sending the second downlink data packet to the wifi AP, the base station may add, to the second downlink data packet, header information that includes a mapping relationship between a radio bearer (Wireless Bearer, RB for short) and a wifi access category (Access Category, AC for short), so that the second downlink data packet can be transmitted by using a wifi network. Specifically, the wifi AP may establish a communication adaptation layer between a wifi radio network and a cellular radio network in advance, that is, establish mapping relationships between all RBs of the base station and wifi ACs. In this case, after receiving the second downlink data packet that is sent by the base station and that includes the header information including the mapping relationship between an RB and a wifi AC, the wifi AP identifies a wifi AC corresponding to the second downlink data packet, sets a wifi transmission parameter according to the wifi AC, and sends the second downlink data packet to the UE. More specifically, a manner for transmitting the second downlink data packet by using a wifi network may be: The wifi AP may use the second downlink data packet as a wifi Media Access Control (Media Access Control, MAC for short) service data unit (MAC Service Data Unit, MSDU for short), further generate a MAC protocol data unit (MAC Protocol Data Unit, MPDU for short) at a wifi MAC layer and generate a physical protocol data unit (Physical Protocol Data Unit, PPDU for short) at a physical layer, and send the MAC protocol data unit and the physical protocol data unit to the UE.

Correspondingly, after receiving the first downlink data packet and the second downlink data packet, the UE may delete, from the second downlink data packet, the header information that includes the mapping relationship between an RB and a wifi AC, so that the second data packet is converted to have a format adaptive to the cellular network, and therefore, the first downlink data packet and the second downlink data packet can be combined, thereby completing transmission of downlink data. The foregoing header information deletion is completed by an adaption layer, in the UE, corresponding to a wifi protocol stack or an adaption layer, in the UE, corresponding to an LTE protocol stack, so as to perform adaptation of a data packet format, so that the UE can combine data packets.

Correspondingly, for uplink data packets, the base station may receive a first uplink data packet sent by the UE and a second uplink data packet sent by the wifi AP, and may delete, from the second uplink data packet, header information that includes the mapping relationship between an RB and a wifi AC, so that the first uplink data packet and the second uplink data packet can be combined into an uplink data packet; and then the base station sends the uplink data packet to the core network device, to complete transmission of uplink data. The foregoing header information deletion is completed by an adaptation layer of the wifi AP or an adaptation layer of the base station, so as to perform adaptation of a data packet format, so that the base station can combine data packets.

In the prior art, when UE performs wireless communication with a cellular network and wifi at the same time, data offloading and merging usually occur on a core network device, for example, a PGW in a core network EPC (evolved packet core), data offloading performed by the core network device is limited only to a service level, and data cannot be offloaded at a data packet level, that is, data packets belonging to a same service can be transmitted by using only one type of radio resource, and data offloading has a relatively rough granularity. When one service includes a relatively large quantity of data packets while another service includes only a data packet having a very small data volume, for offloading in the prior art, the best thing that can be done is to offload the service having a large data volume to one RAT that is named, for example, RAT1, and offload the service having a small data volume to another RAT that is named, for example, RAT2. In this case, a state in which the RAT1 is congested while the RAT2 is idle and a resource of the RAT2 cannot be fully utilized may occur.

The manner in which offloading is performed by a PGW in the prior art is shown in FIG. 1, where a wifi AP is connected to a PGW of a 3GPP core network. In a trusted (trusted) manner, the wifi AP may directly access the PGW by using an s2a interface; and in an un-trusted manner (un-trusted), the wifi AP accesses the PGW by using an s2b interface between an evolved packet data gateway (ePDG, evolved packet data gateway) and the PGW, where in FIG. 1, an ePDG network element is omitted.

The manner in which offloading is performed by a base station in this embodiment is shown in FIG. 2, where a base station eNB serves as an anchor for offloading to wifi. When UE is in a radio resource control connected mode (RRC_CONNECTED) in a cellular network and is associated with a wifi access point, it is equivalent to performing inter-system carrier aggregation CA (CA, carrier aggregation) between the cellular network and wifi. In step 802 of this embodiment, the base station may split a downlink data packet into a first downlink data packet and a second downlink data packet that are separately sent to the UE directly and sent to the UE by using the wifi AP, that is, data offloading is performed by the base station; the base station can split a data packet, achieving a finer offloading granularity, and therefore, utilization of a cellular radio resource and a wifi radio resource can be coordinated at a finer granularity.

In this embodiment, a base station sends a first downlink data packet in a downlink data packet to user equipment UE, and sends a second downlink data packet in the downlink data packet to a Wireless Fidelity access point wifi AP, so that the wifi AP sends the second downlink data packet to the UE. This implements data offloading at a granularity of a data packet, so that a cellular radio resource and a wifi radio resource are coordinated at a granularity of a data packet, thereby improving radio resource utilization.

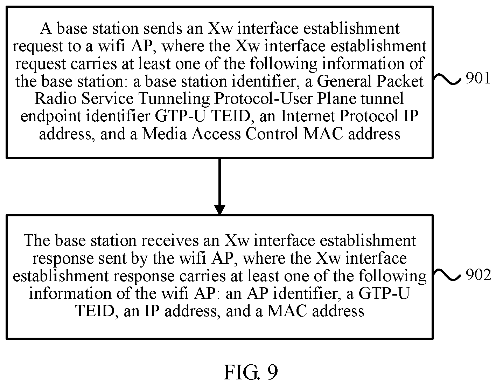

Optionally, during specific implementation, a process of establishing an Xw interface between the base station and the wifi AP and a process of establishing a secondary cell wifiSCell and managing the wifiSCell by the base station may be further added to the method of this embodiment, where FIG. 9 is a flowchart of a method for establishing an Xw interface between a base station and a wifi AP in the embodiment shown in FIG. 8. As shown in FIG. 9, the method of this embodiment includes:

Step 901: The base station sends an Xw interface establishment request to the wifi AP, where the Xw interface establishment request carries at least one of the following information of the base station: a base station identifier, a General Packet Radio Service Tunneling Protocol-User Plane tunnel endpoint identifier GTP-U TEID, an Internet Protocol IP address, and a Media Access Control MAC address.

Step 902: The base station receives an Xw interface establishment response sent by the wifi AP, where the Xw interface establishment response carries at least one of the following information of the wifi AP: an AP identifier, a GTP-U TEID, an IP address, and a MAC address.

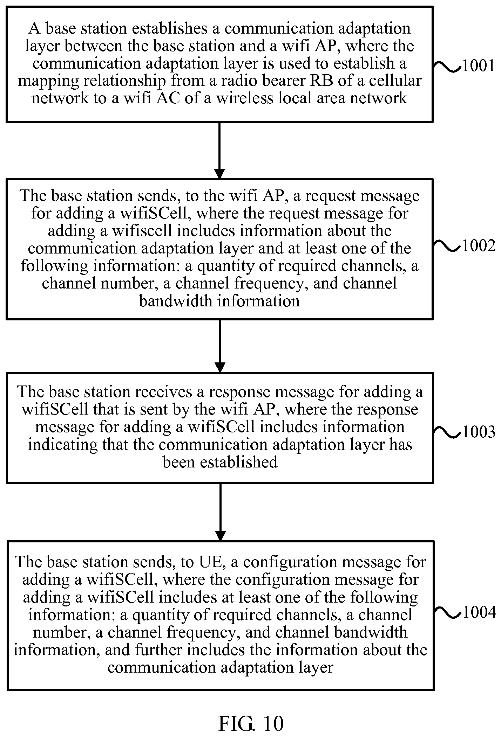

Further, optionally, the Xw interface may be used for data and signaling transmission between the base station and the wifi AP, and the base station can manage a radio resource of the wifi AP by using the Xw interface. To implement a function of managing a radio resource of the wifi AP by the base station, the base station may add a wifi secondary cell wifiSCell by using the Xw interface, that is, use and manage the radio resource of the wifi AP as a wifiSCell. FIG. 10 is a flowchart of adding a wifi secondary cell wifiSCell by a base station based on FIG. 9. As shown in FIG. 10, a process of establishing a wifiSCell by the base station may include:

Step 1001: The base station establishes a communication adaptation layer between the base station and the wifi AP, where the communication adaptation layer is used to establish a mapping relationship from a radio bearer RB of a cellular network to a wifi AC of a wireless local area network.

The mapping relationship between a radio bearer RB and an access category AC may be, for example, a mapping relationship between an RB identifier RB id and an AC identifier AC id, and more specifically, may be a mapping relationship between a GTP-U TEID of each RB and a GTP-U TEID of an AC id.

Step 1002: The base station sends, to the wifi AP, a request message for adding a wifiSCell, where the request message for adding a wifiscell includes information about the communication adaptation layer and at least one of the following information: a quantity of required channels, a channel number, a channel frequency, and channel bandwidth information.

Step 1003: The base station receives a response message for adding a wifiSCell that is sent by the wifi AP, where the response message for adding a wifiSCell includes information indicating that the communication adaptation layer has been established.

During specific implementation, the wifiSCell response message may not include a quantity of channels, a channel number, a channel frequency, and channel bandwidth information of an added wifiSCell, indicating that it is considered by default that information in the response message for adding a wifiSCell is the same as information in the request message for adding a wifiSCell; and if channel information of a wifiSCell added by the wifi AP is not the same as the information in the request message for adding a wifiSCell, the wifiSCell response message may include channel information of the wifiSCell actually added by the wifi AP.

Step 1004: The base station sends, to the UE, a configuration message for adding a wifiSCell, where the configuration message for adding a wifiSCell includes at least one of the following information: a quantity of required channels, a channel number, a channel frequency, and channel bandwidth information, and further includes the information about the communication adaptation layer.

After the wifiSCell is added and the UE is informed, the wifiSCell can be used to transmit a second downlink data packet. One or more channels of the wifiSCell may be used to transmit data, which is equivalent to scheduling radio resources of the wifiSCell. All channels of the wifiSCell may be managed uniformly, for example, activating/deactivating the wifiSCell is equivalent to activating/deactivating all the channels of the wifiSCell; or each channel of the wifiSCell may be managed separately, for example, after one channel of the wifiSCell is activated/deactivated, a current state of another channel is not affected.

After receiving a downlink data packet sent by the core network device, the base station may split the downlink data packet into a first downlink data packet and a second downlink data packet, send the first downlink data packet to the UE, and send the second downlink data packet to the wifi AP, so that the wifi AP sends the second downlink data packet to the UE.

It should be noted that, due to an intrinsic difference between a cellular radio network and a wifi radio network, formats of data packets that are transmitted by using the two types of radio resources are also different. Therefore, before the second downlink data packet is transmitted by using the wifiSCell, adaptation further needs to be performed on the second downlink data packet, so that the second downlink data packet can be transmitted by using a wifi network. Specifically, the base station may add the mapping relationship between an RB and a wifi AC to header information of the second downlink data packet, so that the second downlink data packet can be transmitted by using the wireless local area network to which the wifi AP belongs.

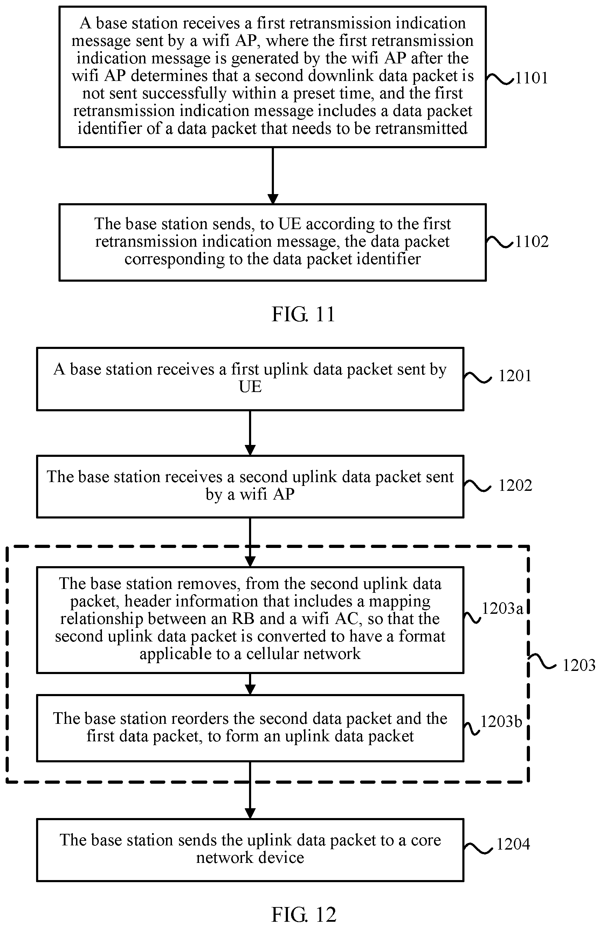

Further optionally, because wifi radio resources have a poor function for supporting quality of service (Quality of Service, QoS for short), to meet a QoS requirement of a service, the base station may perform further processing on a data packet for which wifi quality of service is poor, for example, perform additional retransmission. FIG. 11 is a flowchart of performing retransmission by the base station based on Embodiment 1 of the data transmission method shown in FIG. 8, and as shown in FIG. 11, a method of this embodiment may include:

Step 1101: The base station receives a first retransmission indication message sent by the wifi AP, where the first retransmission indication message is generated by the wifi AP after the wifi AP determines that the second downlink data packet is not sent successfully within a preset time, and the first retransmission indication message includes a data packet identifier of a data packet that needs to be retransmitted.

During specific implementation, when sending the second downlink data packet to the wifi AP, the base station may configure a maximum delay for the second downlink data packet or configure a maximum quantity of retransmission times for the wifi AP, and in this case, in step 1101, when the wifi AP determines that the second data packet is not successfully sent to the UE in a limitative time specified by the maximum delay or that a quantity of times of retransmission performed by the wifi AP reaches the maximum quantity of retransmission times configured for the wifi AP, the wifi AP may give up retransmission, and send a first retransmission indication message to the base station.

Step 1102: The base station sends, to the UE according to the first retransmission indication message, the data packet corresponding to the data packet identifier.

Further specifically, step 1102 may be:
The base station sends, to the UE according to the first retransmission indication message and by using an automatic repeat request (Automatic Retransmission request, ARQ for short) or a hybrid automatic repeat request (HARQ, hybrid ARQ), the data packet corresponding to the data packet identifier.

The foregoing optional solutions have the following effects respectively: An Xw interface is established between a base station and a wifi AP, to implement data transmission between the base station and the wifi AP; further, a secondary cell wifiSCell is added, to implement managing, by the base station, radio resources of the wifi AP, so that the base station can adjust use of wifi channels according to a real-time change in radio resources, and can control an offloading status of a data packet according to a size of a second data packet; the base station performs adaptation on the second downlink data packet, so that the second downlink data packet can be transmitted by using a wifi network; further, by means of a retransmission mechanism, when the wifi AP fails to transmit the second downlink data packet successfully within a preset time, the base station retransmits the second downlink data packet on behalf of the wifi AP, thereby ensuring a QoS requirement of a service.

FIG. 12 is a flowchart of Embodiment 2 of a data transmission method according to the present invention. In this embodiment, a transmission method for uplink data is further described. In an actual scenario in which there is only uplink data but no downlink data, the method of this embodiment may be used separately; and in an actual scenario in which there are both uplink data and downlink data, the method of this embodiment may be used together with the method shown in FIG. 8 or the optional methods that are based on the embodiment shown in FIG. 8. As shown in FIG. 12, the method of this embodiment includes:

Step 1201: A base station receives a first uplink data packet sent by UE.

Step 1202: The base station receives a second uplink data packet sent by a wifi AP.

The second uplink data packet is sent to the wifi AP after the UE performs wifi data format adaptation, which specifically may be: The UE adds, to the second uplink data packet, header information that includes a mapping relationship between a radio bearer RB and a wifi access category AC.

There is no sequence relationship between step 1201 and step 1202.

Step 1203: The base station combines the first uplink data packet and the second uplink data packet into an uplink data packet.

Further specifically, step 1203 may include:
Step 1203a: The base station removes, from the second uplink data packet, header information that includes a mapping relationship between an RB and a wifi AC, so that the second uplink data packet is converted to have a format applicable to a cellular network.
Step 1203b: The base station reorders the second data packet and the first data packet, to form the uplink data packet.
Step 1204: The base station sends the uplink data packet to a core network device.

In this embodiment, a base station separately receives a first uplink data packet sent by UE and a second uplink data packet sent by a wifi AP, and then combines the first uplink data packet and the second uplink data packet into an uplink data packet and sends the uplink data packet to a core network device. This implements data offloading at a granularity of a data packet in an uplink sending process, so that a cellular radio resource and a wifi radio resource are coordinated at a granularity of a data packet, thereby improving radio resource utilization.

Based on the embodiment shown in FIG. 8 and the optional solution shown in FIG. 10, further optionally, after step 1004, the base station may further manage a radio resource of the wifi AP according to a volume of data to be offloaded and wifi channel state information, which includes: deleting the wifiSCell, or the base station may manage channels of the wifiSCell, for example, the base station may negotiate with the wifi AP according to wifi channel state information, to determine (including selecting or updating) a wifi primary channel and secondary channel, add or delete a wifi channel, and activate or deactivate a wifi channel; may further determine a sequence and an opportunity for using, by the UE, a wifi channel; and may further control an offloading algorithm and a traffic control process according to a wifi channel state.

A process of deleting a wifiSCell may be:
Step 1: The base station sends a request message for deleting a wifiSCell to the wifi AP, where the request message for deleting a wifiSCell includes at least one of the following information: a quantity of required channels, a channel number, a channel frequency, and channel bandwidth information.
Step 2: The base station receives a response message for deleting a wifiSCell that is sent by the wifi AP.

The response message may not carry channel-related information, that is, it is considered by default that the wifi AP deletes the wifiSCell according to the information included in the request message for deleting a wifiSCell, that is, the wifi AP performs deletion according to an instruction of the base station; and when the wifi AP changes the information in the request message for deleting a wifiSCell during wifiSCell deletion, the response message for deleting a wifiSCell needs to carry at least one of the following information: a quantity of required channels, a channel number, a channel frequency, and channel bandwidth information.

Step 3: The base station sends an indication message for deleting a wifiSCell to the user equipment UE, where the indication message for deleting a wifiSCell includes at least one of the following information: a quantity of required channels, a channel number, a channel frequency, and channel bandwidth information.

The foregoing steps of deleting a wifiSCell are optional, and need to be performed only after step 1004, and have no restrict sequence relationship with other steps.

A process in which the base station negotiates with the wifi AP according to wifi channel state information, to determine a wifi primary channel and secondary channel may be:
Step 1: The base station sends a primary channel negotiation message to the wifi AP, where the required channel determined by the base station includes the primary channel.

The primary channel negotiation message may carry a channel number of a channel that is selected by the base station among all channels and that can be used as a primary channel. A wifi network that is set according to Wifi protocols such as 802.11n, 802.11ac, and 802.11ad supports multiple channels, including one primary channel and one or more secondary channels, where the primary channel is used to send a control frame and a management frame such as a beacon (beacon) frame, and a data frame, and the secondary channel does not send a beacon frame, and is mainly used to send a data frame.

Step 2: The base station receives a primary channel negotiation response message sent by the wifi AP, where the primary channel negotiation response message includes a channel number of a primary channel determined by the wifi AP.

The channel number of the primary channel determined by the wifi AP may be the same as or different from the channel number selected by the base station in step 1. That is, the channel number provided by base station is merely used for reference, and the primary channel is finally determined by the wifi AP.

Step 3: The base station sends a primary channel indication message to the UE, where the primary channel indication message includes the channel number of the primary channel determined by the wifi AP.

Correspondingly, in the wifiSCell, another channel except the primary channel may be considered as a secondary channel by default.

It should be noted that, in the foregoing steps, the channel number is a manner for indicating a channel, and during specific implementation, another identifier may be used to indicate a primary channel, for example, a frequency or a frequency number of a channel may be used.

The foregoing steps of determining a wifiSCell primary channel and secondary channel are optional, and need to be performed only after step 1004, and have no restrict sequence relationship with other steps. Moreover, the foregoing steps may also be combined with steps 1004 to 1004, for example, a channel number of a primary channel selected by the base station may be added to the request message for adding a wifiSCell that is sent by the base station to the wifi AP; a channel number of a primary channel determined by the wifi AP may be added to the response message for adding a wifiSCell that is sent by the wifi AP to the base station, and the channel number of the primary channel determined by the wifi AP may be added to the configuration message for adding a wifiSCell that is sent by the base station to the UE.

A process of adding a new wifi channel may be:
Step 1: The base station sends a channel addition request message to the wifi AP, where the channel addition request message includes a channel number of a to-be-added channel, and the required channel determined by the base station includes the to-be-added channel.
Step 2: The base station receives a channel addition response message sent by the wifi AP, where the channel addition response message includes a channel number of a to-be-added channel determined by the wifi AP.
Step 3: The base station sends a channel addition indication message to the UE, where the channel addition indication message includes the channel number of the to-be-added channel determined by the wifi AP.

A process of deleting a wifi channel may be:
Step 1: The base station sends a channel deletion request message to the wifi AP, where the channel deletion request message includes a channel number of a to-be-deleted channel.
Step 2: The base station receives a channel deletion response message sent by the wifi AP.
Step 3: The base station sends a channel deletion indication message to the UE, where the channel deletion indication message includes a channel number of the to-be-deleted channel determined by the wifi AP.

Further, according to a data volume of UE, the base station may further instruct the UE to deactivate a wifi channel or activate a wifi channel, to coordinate the UE to use less or more channels. A process of deactivating a wifi channel may be:
The base station sends an indication message for deactivating a wifi channel to the UE, where the indication message for deactivating the wifi channel includes a channel number of the to-be-deactivated wifi channel.

A process of activating a wifi channel may be:
The base station sends an indication message for activating a wifi channel to the UE, where the indication message for activating the wifi channel includes a channel number of the to-be-activated wifi channel.

It should be noted that, activating and deactivating a wifi channel are operations for one single UE; after the base station instructs one particular UE to deactivate a wifi channel, another UE may continue to use the wifi channel; and when the base station instructs one particular UE to activate a wifi channel, a state of the wifi channel relative to another UE is also not changed. Moreover, the base station may instruct, without notifying the wifi AP, the UE to activate or activate a wifi channel.

Further, the base station may also determine, according to a wifi channel state, a sequence and an opportunity for using, by the UE, the wifi channel, and a process thereof may be as follows:

The base station sends a wifi channel sequence indication message to the UE, so that the UE receives or sends data by using the wifi channel and by using a sequence determined by the base station.

Correspondingly, after receiving the wifi channel sequence indication message, according to a volume of data to be sent or received and a channel state and according to sequence information included in the wifi channel sequence indication message, the UE may send data by preferentially using a wifi channel that is arranged in the front of the sequence or receive data that is sent on this wifi channel.

It should be noted that, the foregoing steps of adding or deleting a wifi channel, activating or deactivating a wifi channel, and determining a sequence and an opportunity for using, by the UE, a wifi channel are all optional, and need to be performed only after step 1004, and have no strict sequence relationship with other steps.

Further, the base station may control a volume of to-be-offloaded data according to a wifi channel state and a data volume, and a process thereof may be as follows:

The base station determines a size of the second downlink data packet according to load of a wifi channel and/or strength of a wifi signal.

Specifically, in a case in which a wifi channel has relatively small load and/or a wifi signal has relatively powerful strength, the base station may increase a volume of data to be offloaded to the wifi AP, that is, increase a data volume of the second downlink data packet; in a case in which a wifi channel has relatively heavy load and/or a wifi signal has relatively weak strength, the base station may decrease a volume of data to be offloaded to the wifi AP, that is, decrease a data volume of the second downlink data packet.

Alternatively, the wifi AP may first send, to the base station, a notification message for increasing or decreasing a volume of data to be offloaded to the wifi AP, where the notification message may carry, for example, capacity or data volume allocation information, and the base station then adjusts a data volume of the second downlink data packet according to the notification message.

Correspondingly, for uplink data, volume of data to be offloaded is controlled by the UE according to a wifi channel state, while the base station may indirectly adjust and control a volume of data to be offloaded in the foregoing manner of adding or deleting a wifi channel.

Further, in the foregoing embodiment, in the process of adding a wifiSCell in steps 1002 to 1004, and in the process of deleting the wifiSCell, management operations on radio resources of the foregoing wifi AP may be performed in batches, for example, when a wifiSCell is added, any one or a combination of the following operations are performed: adding all wifi channels of the wifi AP, determining a wifi primary channel, activating all wifi channels, deactivating all wifi channels, determining a wifi channel using sequence, and the like; and when a wifiSCell is deleted, the following operation is performed: deleting all wifi channels of the wifi AP.

For example, the process of adding a wifiSCell in steps 1002 to 1004 may be:
After the base station establishes the mapping relationship from an RB to a wifi AC and uses the mapping relationship as the communication adaptation layer from the wifi network to the cellular network, the following steps are performed:
   Step 1: The base station sends, to the wifi AP, a request message for adding a wifiSCell, where the request message for adding a wifiSCell includes information about the communication adaptation layer, all wifi channels supported by the wifi AP, a MAC address of the UE, capability information of the UE, context information of the UE, an identifier of a radio bearer RB of a second downlink data packet, and QoS information of the second downlink data packet.

The context information of the UE is, for example, a cell-radio network temporary identifier C-RNTI of the UE.

Step 2: The base station receives a response message for adding a wifiSCell that is sent by the wifi AP, where the response message for adding a wifiSCell includes capability information, a MAC address, and GTP-U TEID address information of the wifi AP, and information indicating that the communication adaptation layer has been established.

Specifically, before step 2, the wifi AP may further perform the following operation: After receiving the request message for adding a wifiscell, the wifi AP determines that the UE can use all channels of the wifiSCell, and the wifi AP may control, according to a scheduling mechanism of the wifi AP, a manner in which the UE uses each channel. The Wifi AP may further establish the communication adaptation layer between wifi and a cellular network, including establishing the mapping relationship between a wifi access category AC and a radio bearer RB of the cellular network.

Step 3: The base station sends, to the UE, a configuration message for adding a wifiSCell, where the configuration message for adding a wifiSCell includes related information of all channels supported by the Wifi AP and information about the communication adaptation layer.

The related information of all channels supported by the Wifi AP refers to a channel quantity, channel numbers, channel frequencies, and channel bandwidth information of all the channels supported by the wifi AP.

The foregoing step 1 to step 3 is a process of adding wifiSCells in batches. Correspondingly, steps of deleting, by the base station, wifiSCells in batches may include:

Step 4: The base station sends a request message for deleting a wifiSCell to the wifi AP, where the request message for deleting a wifiSCell includes an identifier information of the wifiSCell, and the base station deletes the communication adaptation layer.

Specifically, the identifier information of the wifiSCell may be a MAC address or GTP-U TEID information of the wifi AP.

Step 5: The base station receives a response message for deleting a wifiSCell that is sent by the wifi AP.

After receiving the request message for deleting a wifiSCell that is sent by the base station, the wifi AP may delete the communication adaptation layer, so that the UE no longer uses wifi channels of the wifi AP.

Step 6: The base station sends an indication message for deleting a wifiSCell to the UE, where the indication message for deleting a wifiSCell includes indication information for deleting all channels of the wifi AP.

Correspondingly, after receiving the indication message for deleting a wifiSCell, the UE may delete the wifiSCell, and delete all the wifi channels supported by the Wifi AP.

It should be noted that the process of adding wifiSCells in batches and the process of deleting wifiSCells in batches are independent from each other, and during specific implementation, steps 1 to 3 and steps 4 to 6 may be performed discontinuously.

This optional solution has the following technical effect: In a process of adding a wifiSCell and deleting a wifiSCell, information that indicates that an operation is performed on all channels of the wifi AP is carried, which implements a management function of adding or deleting all the channels of the wifi AP in batches.

Further, the foregoing embodiment may further include an operation of activating or deactivating all channels of the wifi AP in batches. Specifically, the base station may send an indication message for activating a wifiSCell to the UE, to instruct the UE to start using all channels supported by the wifi AP, or the base station may send an indication message for deactivating a wifiSCell to the UE, to instruct the UE to stop using all channels supported by the wifi AP.

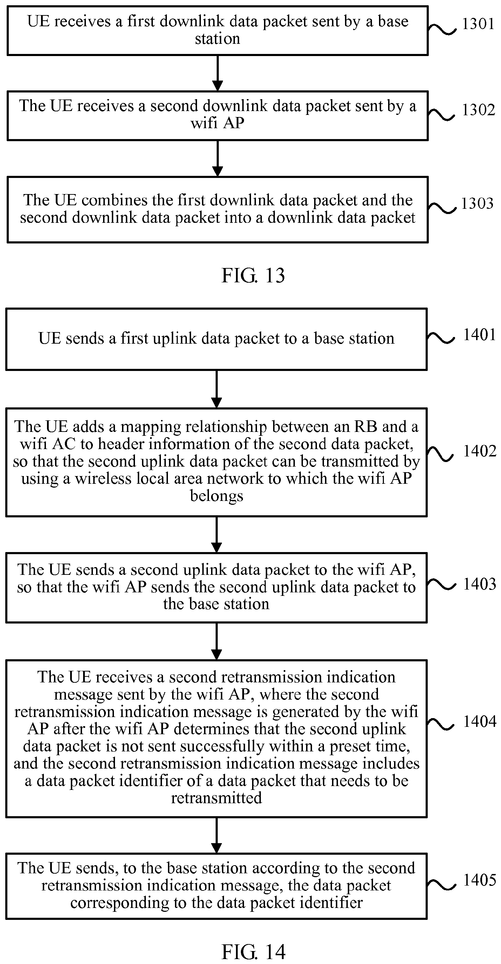

FIG. 13 is a flowchart of Embodiment 3 of a data transmission method according to the present invention, and this embodiment is executed by UE. As shown in FIG. 13, the method of this embodiment may include:
Step 1301: UE receives a first downlink data packet sent by a base station.
Step 1302: The UE receives a second downlink data packet sent by a wifi AP.

The second downlink data packet is sent by the base station to the wifi AP through an Xw interface, and the Xw interface is used by the base station to manage a wifi radio resource.

During specific implementation, the second downlink data packet is sent by the base station to the wifi AP in advance, and moreover, the base station adds, to the second downlink data packet, header information including a mapping relationship between a radio bearer RB and a wifi access category AC, so that the second downlink data packet can be transmitted by using a wireless local area network to which the wifi AP belongs.

Moreover, before step 1302, the method further includes:
receiving, by the UE, a configuration message for adding a wifiSCell that is sent by the base station, where the configuration message for adding a wifiscell includes at least one of the following information: a quantity of required channels, a channel number, a channel frequency, and channel bandwidth information, and further includes information about a communication adaptation layer, where the information about the communication adaptation layer includes a mapping relationship, established by the base station, from a radio bearer RB to a wifi access category AC.

That is, the UE first needs to receive the configuration message for adding a wifiSCell that is sent by the base station, to know that the second downlink data packet needs to be received from at least one channel of the wifi AP, and obtain the mapping relationship, established by the base station, from a radio bearer RB to a wifi access category AC, so that the UE can establish the communication adaptation layer according to the mapping relationship, to remove the header information that includes the mapping relationship between an RB and a wifi AC subsequently in step 1303, thereby completing combining the first downlink data packet and the second downlink data packet.

Step 1303: The UE combines the first downlink data packet and the second downlink data packet into a downlink data packet.

Specifically, after receiving the first downlink data packet and the second downlink data packet, the UE may delete, from the second downlink data packet, the header information that includes the mapping relationship between an RB and a wifi AC, so that the first downlink data packet and the second downlink data packet can be combined, thereby completing transmission of downlink data.

Specifically, step 1303 may include:
Step 1: The UE removes, from the second downlink data packet and according to information about a communication adaptation layer, the header information that includes the mapping relationship between a radio bearer RB and a wifi access category AC, so that the second downlink data packet is converted to be applicable to the cellular network to which the base station belongs.
Step 2: The UE reorders the first downlink data packet and the second downlink data, to form a downlink data packet.

After receiving the first downlink data packet and the second downlink data packet, the UE may delete, from the second downlink data packet, the header information that includes the mapping relationship between an RB and a wifi AC, so that the first downlink data packet and the second downlink data packet can be combined, thereby completing transmission of downlink data.

Correspondingly, for an uplink data packet, the UE may split the uplink data packet into a first uplink data packet and a second uplink data packet, send the first uplink data packet to the base station, and send the second uplink data packet to the wifi AP, so that the wifi AP forwards the second uplink data packet to the base station; the base station then combines the first uplink data packet and the second uplink data packet into an uplink data packet, and sends the uplink data packet to the core network device, to complete transmission of uplink data.

Compared with the prior art in which offloading is limited only to a service level, this embodiment can implement offloading at a data packet level, achieving a finer offloading granularity. Therefore, radio resource utilization is higher.

In this embodiment, UE separately receives a first downlink data packet sent by a base station and a second downlink data packet sent by a wifi AP, and then combines the first downlink data packet and the second downlink data packet into a downlink data packet. This implements data offloading at a granularity of a data packet, so that a cellular radio resource and a wifi radio resource are coordinated at a granularity of a data packet, thereby improving radio resource utilization.

FIG. 14 is a flowchart of Embodiment 4 of a data transmission method according to the present invention, and this embodiment is also executed by UE. In this embodiment, a transmission method for uplink data is further described. In an actual scenario in which there is only uplink data but no downlink data, the method of this embodiment may be used separately; and in an actual scenario in which there are both uplink data and downlink data, the method of this embodiment may be used together with the method of the embodiment shown in FIG. 13. As shown in FIG. 14, the method of this embodiment includes:
Step 1401: UE sends a first uplink data packet to a base station.
Step 1402: The UE adds a mapping relationship between an RB and a wifi AC to header information of the second data packet, so that the second uplink data packet can be transmitted by using a wireless local area network to which the wifi AP belongs.
Step 1402 provides a specific implementation manner for enabling the second uplink data packet to be transmitted by using the wireless local area network to which the wifi AP belongs, and persons skilled in the art may understand that another processing manner may be used to enable the second uplink data packet to be transmitted by using the wireless local area network to which the wifi AP belongs, which is not limited in the present invention.
Step 1403: The UE sends the second uplink data packet to the wifi AP, so that the wifi AP sends the second uplink data packet to the base station.

Further optionally, because wifi radio resources have a poor function for supporting quality of service (Quality of Service, QoS for short), to meet a QoS requirement of a service, the base station may configure in advance a method for performing further processing on a data packet for which wifi quality of service is poor, for example, configure that additional retransmission is performed by the UE. Specifically, after step 1403, the method may further include optional steps 1404 and 1405:
Step 1404: The UE receives a second retransmission indication message sent by the wifi AP, where the second retransmission indication message is generated by the wifi AP after the wifi AP determines that the second uplink data packet is not sent successfully within a preset time, and the second retransmission indication message includes a data packet identifier of a data packet that needs to be retransmitted.

During specific implementation, the base station may configure in advance a maximum delay for the second uplink data packet or configure a maximum quantity of retransmission times for the wifi AP, or when sending the second uplink data packet to the wifi AP in step 602, the UE may configure a maximum delay for the second uplink data packet or configure a maximum quantity of retransmission times for the wifi AP, and in this case, in step 603, when the wifi AP determines that the second data packet is not successfully sent to the base station in a limitative time specified by the maximum delay or that a quantity of times of retransmission performed by the wifi AP reaches the maximum quantity of retransmission times configured for the wifi AP, the wifi AP may give up retransmission, and send a second retransmission indication message to the UE.

Step 1405: The UE sends, to the base station according to the second retransmission indication message, the data packet corresponding to the data packet identifier.

Specifically, step 1405 may be: The UE sends, to the base station according to the second retransmission indication message and by using an automatic repeat request ARQ or a hybrid automatic repeat request HARQ, the data packet corresponding to the data packet identifier.

In this embodiment, UE separately sends a first uplink data packet to a base station and a second uplink data packet to a wifi AP, and the wifi AP forwards the second uplink data packet to the base station, so that the base station combines the first uplink data packet and the second uplink data packet into an uplink data packet and sends the uplink data packet to a core network device. This implements data offloading at a granularity of a data packet in an uplink sending process, so that a cellular radio resource and a wifi radio resource are coordinated at a granularity of a data packet, thereby improving radio resource utilization.

Further, after the receiving, by the UE, a configuration message for adding a wifiSCell that is sent by the base station, the embodiment shown in FIG. 13 or FIG. 14 may further include: operations such as addition, deletion, activation, deactivation, and determining a sequence of wifi channels for the wifiSCell and wifi channels of the wifiSCell; operations performed by the UE are specifically as follows:
Optionally, after the receiving, by the UE, a configuration message for adding a wifiSCell that is sent by the base station, the method may further include:
   receiving, by the UE, an indication message for deleting a wifiSCell that is sent by the base station, where the indication message for deleting a wifiSCell includes at least one of the following information: a quantity of required channels, a channel number, a channel frequency, and channel bandwidth information.

Optionally, after the receiving, by the UE, a configuration message for adding a wifiSCell that is sent by the base station, the method may further include:
receiving, by the UE, a primary channel indication message sent by the base station, where the primary channel indication message includes a channel number of a primary channel determined by the wifi AP.

Optionally, after the receiving, by the UE, a configuration message for adding a wifiSCell that is sent by the base station, the method may further include:
receiving, by the UE, a channel addition indication message sent by the base station, where the channel addition indication message includes a channel number of the to-be-added channel.

Optionally, after the receiving, by the UE, a configuration message for adding a wifiSCell that is sent by the base station, the method may further include:
receiving, by the UE, a channel deletion indication message sent by the base station, where the channel deletion indication message includes a channel number of the to-be-deleted channel.

Optionally, after the receiving, by the UE, a configuration message for adding a wifiSCell that is sent by the base station, the method may further include:
receiving, by the UE, a channel addition indication message sent by the base station, where the channel addition indication message includes a channel number of the to-be-added channel.

Optionally, after the receiving, by the UE, a configuration message for adding a wifiSCell that is sent by the base station, the method may further include:
receiving, by the UE, an indication message for deactivating a wifi channel, where the indication message for deactivating the wifi channel is sent by the base station and includes a channel number of the to-be-deactivated wifi channel.

Optionally, after the receiving, by the UE, an indication message for deactivating a wifi channel, where the indication message for deactivating the wifi channel is sent by the base station, the method may further include:
receiving, by the UE, an indication message for activating a wifi channel, where the indication message for activating a wifi channel is sent by the base station and includes a channel number of the to-be-activated wifi channel.

Optionally, after the receiving, by the UE, a configuration message for adding a wifiSCell that is sent by the base station, the method may further include:
receiving, by the UE, a wifi channel sequence indication message sent by the base station; and
receiving or sending, by the UE, data by using a sequence determined by the base station and by using the wifi channel.

It should be noted that, the foregoing management for the wifiSCell and wifi channels of the wifiSCell, for example, addition, deletion, activation, deactivation, and determining a sequence of wifi channels, is managed by the base station. Therefore, the UE performs a main operation of receiving an indication message from the base station, and operates according to an instruction of the base station.

Optionally, after the receiving, by the UE, a configuration message for adding a wifiSCell that is sent by the base station, the method may further include:
determining, by the UE, a size of the second uplink data packet according to load of a wifi channel and/or strength of a wifi signal.

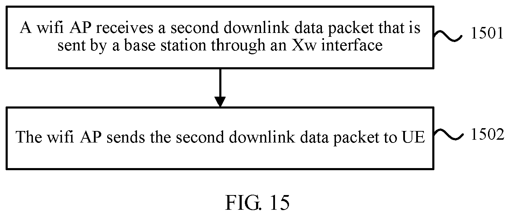

FIG. 15 is a flowchart of Embodiment 5 of a data transmission method according to the present invention, and this embodiment is executed by a wifi AP. As shown in FIG. 5, the method of this embodiment may include:

Step 1501: A wifi AP receives a second downlink data packet that is sent by a base station through an Xw interface.

The Xw interface is used by the base station to manage wifi radio resources. The second downlink data packet is sent by the base station to the wifi AP in advance, and moreover, the base station may add, to the second downlink data packet, header information including a mapping relationship between a radio bearer RB and a wifi access category AC, so that the second downlink data packet can be transmitted by using a wireless local area network to which the wifi AP belongs.

Step 1502: The wifi AP sends the second downlink data packet to UE.

Correspondingly, after receiving the second downlink data packet, the UE may combine the second downlink data packet with a first downlink data packet that is received by the UE from the base station, thereby implementing transmission of downlink data.

Correspondingly, for an uplink data packet, the wifi AP may receive a second uplink data packet sent by the UE, and sends the first uplink data packet to the base station, so that the base station combines the first uplink data packet and the second uplink data packet into an uplink data packet, and sends the uplink data packet to the core network device, thereby implementing transmission of uplink data.

Compared with the prior art in which offloading is limited only to a service level, this embodiment can implement offloading at a data packet level, achieving a finer offloading granularity. Therefore, radio resource utilization is higher.

Further, after step 1502, the method of this embodiment may further include:
When the wifi AP determines that the second downlink data packet is not successfully sent to the UE within a preset time, the wifi AP sends a first retransmission indication message to the base station, where the first retransmission indication message includes a data packet identifier of a data packet that needs to be retransmitted, so that the base station sends, to the UE, the data packet corresponding to the data packet identifier.

During specific implementation, when sending the second uplink data packet to the wifi AP, the base station may configure a maximum delay for the second uplink data packet or configure a maximum quantity of retransmission times for the wifi AP, and in this case, in the foregoing step, when the wifi AP determines that the second downlink data packet is not successfully transmitted to the UE in a limitative time specified by the maximum delay or that a quantity of times of retransmission performed by the wifi AP reaches the maximum quantity of retransmission times configured for the wifi AP, the wifi AP may give up retransmission, and send a first retransmission indication message to the base station.

In this embodiment, a wifi AP receives, from a base station, a second downlink data packet in a downlink data packet, and forwards the second downlink data packet to UE, so that some downlink data is transmitted by using a wifi radio resource, and data offloading is performed at a granularity of a data packet; therefore, a cellular radio resource and a wifi radio resource are coordinated at a granularity of a data packet, thereby improving radio resource utilization.

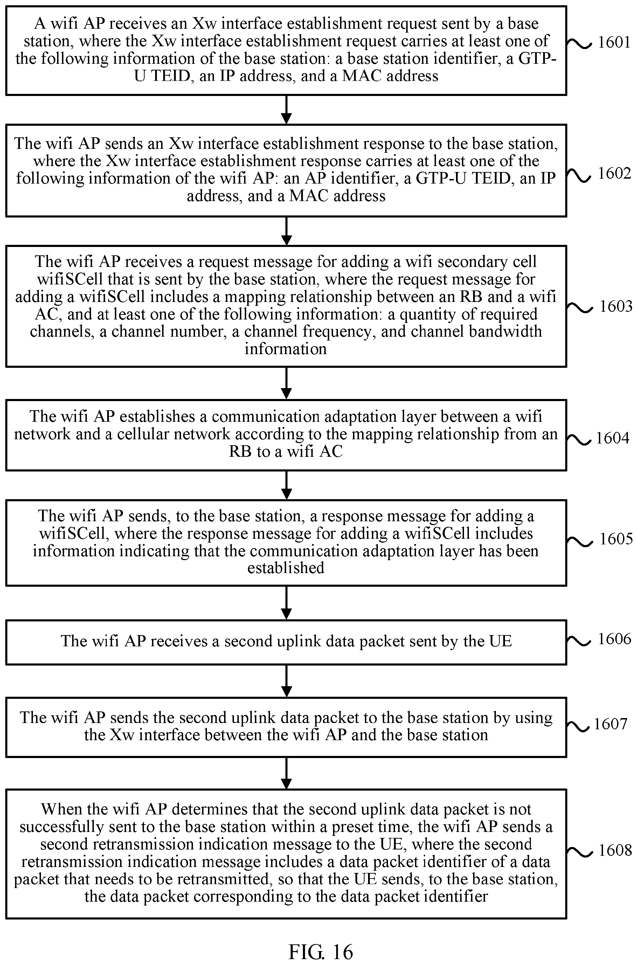

FIG. 16 is a flowchart of Embodiment 6 of a data transmission method according to the present invention, and this embodiment is also executed by a wifi AP. In this embodiment, a transmission method for uplink data is further described. In an actual scenario in which there is only uplink data but no downlink data, the method of this embodiment may be used separately; and in an actual scenario in which there are both uplink data and downlink data, the method of this embodiment may be used together with the method of the embodiment shown in FIG. 15. Moreover, further, the method of this embodiment may further include processes of establishing an Xw interface between a wifi AP and a base station before data transmission, and interacting with each other by three network elements: the wifi AP, the base station, and UE, to establish a wifiSCell and manage the wifiSCell and wifi channels of the wifiSCell. As shown in FIG. 16, the method of this embodiment includes:
Step 1601: A wifi AP receives an Xw interface establishment request sent by a base station, where the Xw interface establishment request carries at least one of the following information of the base station: a base station identifier, a GTP-U TEID, an IP address, and a MAC address.
Step 1602: The wifi AP sends an Xw interface establishment response to the base station, where the Xw interface establishment response carries at least one of the following information of the wifi AP: an AP identifier, a GTP-U TEID, an IP address, and a MAC address.
Step 1601 and step 1602 are a process of establishing an Xw interface between the wifi AP and the base station.
Step 1603: The wifi AP receives a request message for adding a wifi secondary cell wifiSCell that is sent by the base station, where the request message for adding a wifiSCell includes a mapping relationship between an RB and a wifi AC, and at least one of the following information: a quantity of required channels, a channel number, a channel frequency, and channel bandwidth information.

Specifically, the mapping relationship from a radio bearer RB to a wifi access category AC may be mapping relationships from all RBs to ACs, for example, may be a mapping relationship between a GTP-U TEID of each RB and a GTP-U TEID of an AC id.

Step 1604: The wifi AP establishes a communication adaptation layer between a wifi network and a cellular network according to the mapping relationship from an RB to a wifi AC.

Step 1605: The wifi AP sends, to the base station, a response message for adding a wifiSCell, where the response message for adding a wifiSCell includes information indicating that the communication adaptation layer has been established.

For the base station, after receiving the response message for adding a wifiSCell, the base station may send, to the UE, a configuration message for adding a wifiscell, so that the UE learns that the wifiSCell has been established, and acquires an available wifi channel in the wifiSCell, and in this way, the UE can send a second uplink data packet to the wifi AP.

Steps 1603 to 1605 are a process of establishing a wifiSCell, and after step 1605 is completed, the base station may interact with the wifi AP, to manage the wifiSCell, for example, deleting the wifiSCell, performing negotiation to determine a primary channel, and adding or deleting a channel. A specific process of managing the wifiSCell is described subsequently.

Step 1606: The wifi AP receives a second uplink data packet sent by the UE.

Further, header information of the second downlink data packet includes the mapping relationship between a radio bearer RB and a wifi access category AC, and the mapping relationship is used to enable the second downlink data packet to be transmitted by using the wireless local area network to which the wifi AP belongs.

Step 1607: The wifi AP sends the second uplink data packet to the base station by using the Xw interface between the wifi AP and the base station.

Correspondingly, for transmission of uplink data, this step is: The wifi AP receives, by using the Xw interface between the wifi AP and the base station, the second downlink data packet sent by the base station.

Further optionally, because wifi radio resources have a poor function for supporting quality of service (Quality of Service, QoS for short), to meet a QoS requirement of a service, the base station may configure in advance a method for performing further processing on a data packet for which wifi quality of service is poor, for example, configure that additional retransmission is performed by the UE. Specifically, after step 1607, the method may further include optional step 1608:

Step 1608: When the wifi AP determines that the second uplink data packet is not successfully sent to the base station within a preset time, the wifi AP sends a second retransmission indication message to the UE, where the second retransmission indication message includes a data packet identifier of a data packet that needs to be retransmitted, so that the UE sends, to the base station, the data packet corresponding to the data packet identifier.

In this embodiment, a wifi AP receives a second uplink data packet sent by UE, and sends the second uplink data packet to a base station, so that the base station combines the second uplink data packet and a first uplink data packet that is received from the UE into an uplink data packet, and sends the uplink data packet to a core network device. This implements data offloading at a granularity of a data packet during an uplink sending process, so that a cellular radio resource and a wifi radio resource are coordinated at a granularity of a data packet, thereby improving radio resource utilization. Moreover, when the wifi AP determines that the second uplink data packet is not successfully sent to the base station within a preset time, the wifi AP sends a second retransmission indication message to the UE, so that the UE sends the data packet to the base station on behalf of the wifi AP, thereby ensuring a QoS requirement. In addition, an Xw interface is established between the wifi AP and the base station, and radio resources of the wifi AP are managed as a wifiSCell of the base station, so that the base station coordinates the cellular resource and the wifi radio resource.

In the foregoing embodiment, further optionally, after a wifiSCell is added, the wifiSCell may be deleted, that is, after step 1605, the method may further include:
Step 1: The wifi AP receives a request message for deleting a wifiSCell that is sent by the base station, where the request message for deleting a wifiSCell includes at least one of the following information: a quantity of required channels, a channel number, a channel frequency, and channel bandwidth information.
Step 2: The wifi AP sends a response message for deleting a wifiSCell to the base station.

In the foregoing embodiment, further optionally, after a wifiSCell is added, the base station and the wifi AP may negotiate with each other to determine a primary channel, that is, after step 1605, the method may further include:
Step 1: The wifi AP receives a primary channel negotiation message sent by the base station.

The primary channel negotiation message may include a channel number of a primary channel selected by the base station.

Step 2: The wifi AP sends a primary channel negotiation response message to the base station, where the primary channel negotiation response message includes a channel number of a primary channel determined by the wifi AP.

The primary channel determined by the wifi AP is not necessarily the same as the primary channel selected by the base station.

In the foregoing embodiment, further optionally, after a wifiSCell is added, the base station may request the wifi AP to add a channel, that is, after step 1605, the method may further include:
Step 1: The wifi AP receives a channel addition request message sent by the base station, where the channel addition request message includes a channel number of a to-be-added channel.
Step 2: The wifi AP sends a channel addition response message to the base station.

In the foregoing embodiment, further optionally, after a wifiSCell is added, the base station may request the wifi AP to delete a channel, that is, after step 1605, the method may further include:
Step 1: The wifi AP receives a channel deletion request message sent by the base station, where the channel deletion request message includes a channel number of a to-be-deleted channel.
Step 2: The wifi AP sends a channel deletion response message to the base station.

In the foregoing embodiment, further optionally, in the process of adding a wifiSCell, the base station and the wifi AP may further exchange more information, so that the base station learns capability information of the wifi AP better, and manages the wifiSCell according to radio resource information of the wifi AP and a data packet to be offloaded, for example:
The request message for adding a wifi secondary cell wifiSCell that is sent by the base station and received by the wifi AP may further include:
   a MAC address of the UE, capability information of the UE, context information of the UE, and radio bearer RB identifier information and corresponding QoS information of the second data packet.

The response message for adding a wifiSCell that is sent by the wifi AP to the base station may further include: capability information of the wifi AP.

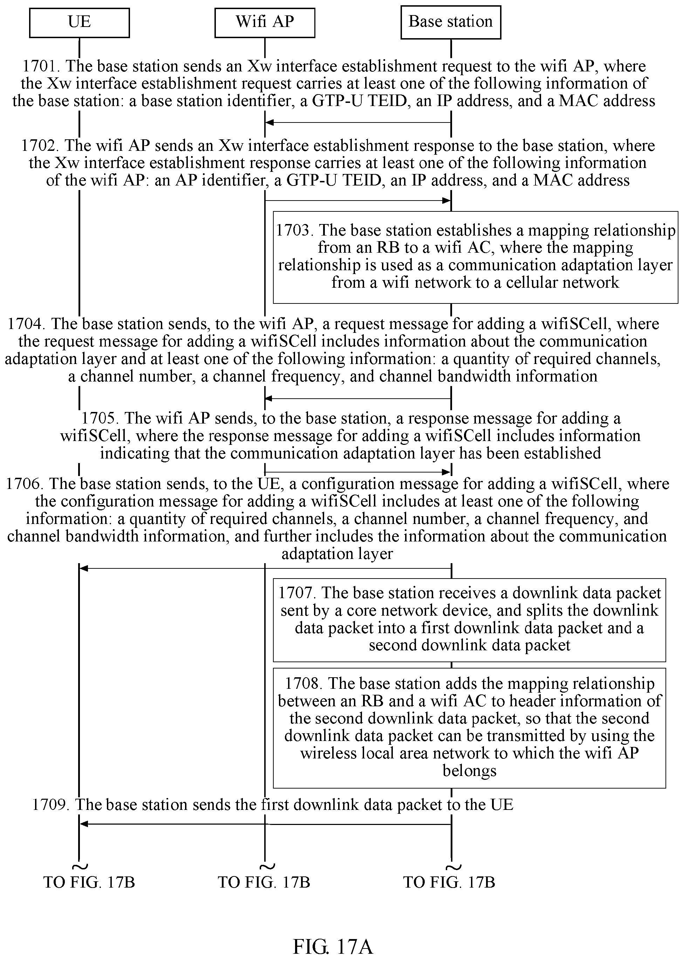

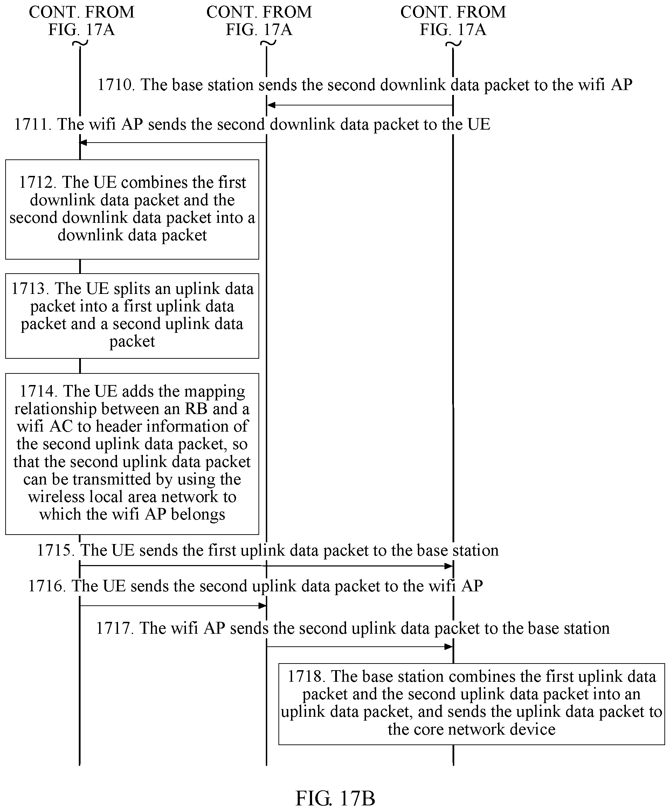

FIG. 17A and FIG. 17B are a signaling flowchart of Embodiment 7 of a data transmission method according to the present invention. In this embodiment, processes of interacting with each other by three network elements: a base station, a wifi AP, and UE, to establish an Xw interface and a wifiSCell, and transmitting uplink data and downlink data are described. A process of managing, by the base station, a wifiSCell and wifi channels of the wifiSCell is the same as the method described in any one of the foregoing embodiments, and is not described in detail again in this embodiment. As shown in FIG. 17A and FIG. 17B, the method of this embodiment may include:
Step 1701: A base station sends an Xw interface establishment request to a wifi AP, where the Xw interface establishment request carries at least one of the following information of the base station: a base station identifier, a GTP-U TEID, an IP address, and a MAC address.
Step 1702: The wifi AP sends an Xw interface establishment response to the base station, where the Xw interface establishment response carries at least one of the following information of the wifi AP: an AP identifier, a GTP-U TEID, an IP address, and a MAC address.
Step 1703: The base station establishes a mapping relationship from an RB to a wifi AC, where the mapping relationship is used as a communication adaptation layer from a wifi network to a cellular network.
Step 1704: The base station sends, to the wifi AP, a request message for adding a wifiSCell, where the request message for adding a wifiSCell includes information about the communication adaptation layer and at least one of the following information: a quantity of required channels, a channel number, a channel frequency, and channel bandwidth information.
Step 1705: The wifi AP sends, to the base station, a response message for adding a wifiSCell, where the response message for adding a wifiSCell includes information indicating that the communication adaptation layer has been established.
Before step 1705, the wifi AP may first establish a communication adaptation layer on the wifi AP according to the information, sent by the base station, about the communication adaptation layer.
Step 1706: The base station sends, to the UE, a configuration message for adding a wifiSCell, where the configuration message for adding a wifiSCell includes at least one of the following information: a quantity of required channels, a channel number, a channel frequency, and channel bandwidth information, and further includes the information about the communication adaptation layer.

Till now, a wifiSCell has been established, and it may be considered by default that the wifiSCell includes at least one available channel; the base station and the wifi AP may transmit data and signaling to each other, and the UE and the wifi AP may transmit data to each other.

In the following, a process of transmitting uplink and downlink data between the three network elements: the base station, the wifi AP, and the UE, where there is no strict sequence relationship between uplink transmission steps and downlink transmissions steps.

Step 1707: The base station receives a downlink data packet sent by a core network device, and splits the downlink data packet into a first downlink data packet and a second downlink data packet.

Step 1708: The base station adds a mapping relationship between an RB and a wifi AC to header information of the second downlink data packet, so that the second downlink data packet can be transmitted by using the wireless local area network to which the wifi AP belongs.

Step 1709: The base station sends the first downlink data packet to UE.

Step 1710: The base station sends the second downlink data packet to the wifi AP.

Step 1711: The wifi AP sends the second downlink data packet to the UE.

After step 1711, the method may further include: according to a QoS requirement, the base station may perform further processing on a data packet for which wifi quality of service is relatively poor, for example, the base station performs a step of retransmitting the data packet on behalf of the wifi AP.

Step 1712: The UE combines the first downlink data packet and the second downlink data packet into a downlink data packet.

Step 1713: The UE splits an uplink data packet into a first uplink data packet and a second uplink data packet.

Step 1714: The UE adds the mapping relationship between an RB and a wifi AC to header information of the second uplink data packet, so that the second uplink data packet can be transmitted by using the wireless local area network to which the wifi AP belongs.

Step 1715: The UE sends the first uplink data packet to the base station.

Step 1716: The UE sends the second uplink data packet to the wifi AP.

Step 1717: The wifi AP sends the second uplink data packet to the base station.

After step 1717, the method may further include: according to a QoS requirement, the base station may configure in advance a method for performing further processing on a data packet for which wifi quality of service is relatively poor, for example, the base station may configure that extra retransmission is performed by the UE.

Step 1718: The base station combines the first uplink data packet and the second uplink data packet into an uplink data packet, and sends the uplink data packet to the core network device.

In this embodiment, an Xw interface is established between a base station and a wifi AP to implement data transmission between the base station and the wifi AP. Further, a secondary cell wifiSCell is added to implement managing, by the base station, radio resources of the wifi AP, so that the base station can adjust use of wifi channels according to a real-time change in the radio resources, and can control an offloading status of a data packet according to a size of a second data packet. The base station performs adaptation on the second downlink data packet, so that the second downlink data packet can be transmitted by using a wifi network, thereby implementing offloading of downlink data. In addition, UE separately sends a first uplink data packet to the base station and a second uplink data packet to the wifi AP, and the wifi AP forwards the second uplink data packet to the base station, which implements offloading of uplink data. Data offloading is performed at a granularity of a data packet, so that a cellular radio resource and a wifi radio resource are coordinated at a granularity of a data packet, thereby improving radio resource utilization.

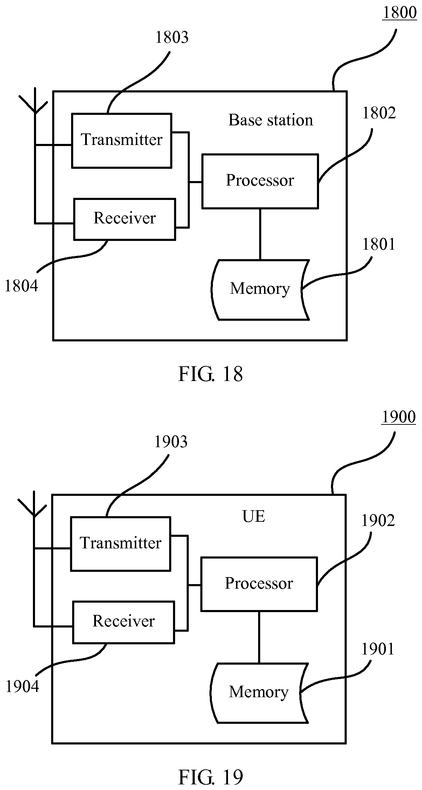

FIG. 18 is a schematic structural diagram of an embodiment of a base station according to the present invention. As shown in FIG. 18, a base station 1800 of this embodiment may include: a memory 1801, a processor 1802, a transmitter 1803, and a receiver 1804. The memory 1801, the processor 1802, the transmitter 1803, and the receiver 1804 may be connected by using a system bus or in another manner, and in FIG. 18, connection by using a system bus is used as an example, where the system bus may be an ISA bus, a PCI bus, an EISA bus, or the like. The system bus may be classified into an address bus, a data bus, a control bus, and the like. For ease of illustration, in FIG. 18, only one line is used to represent the system bus, but it does not indicate that there is only one bus or one type of bus, where
the receiver 1804 is configured to receive a downlink data packet sent by a core network device; and
the transmitter 1803 is configured to send a first downlink data packet in the downlink data packet to user equipment UE, and send a second downlink data packet in the downlink data packet to a Wireless Fidelity access point wifi AP through an Xw interface, so that the wifi AP sends the second downlink data packet to the UE, and the base station manages a wifi radio resource by using the Xw interface.

Further, the processor 1802 is configured to establish a communication adaptation layer between the base station and the wifi AP, where the communication adaptation layer is used to establish a mapping relationship from a radio bearer RB of a cellular network to a wifi access category AC of a wireless local area network.

Further, the transmitter 1803 is further configured to:
send, to the wifi AP, a request message for adding a wifi secondary cell wifiSCell, and send, to the user equipment UE, a configuration message for adding a wifi secondary cell wifiSCell, where the request message for adding a wifiscell or the configuration message for adding a wifiSCell includes information about the communication adaptation layer and at least one of the following: a quantity of required channels, a channel number, a channel frequency, and a channel bandwidth; or
send a request message for deleting a wifiSCell to the wifi AP and send an indication message for deleting a wifiscell to the UE, where the request message for deleting a wifiSCell or the wifiscell indication message includes at least one of the following: a quantity of required channels, a channel number, a channel frequency, and a channel bandwidth.

Further, the communication adaptation layer is used to add the mapping relationship between a radio bearer RB and a wifi access category AC to header information of the second downlink data packet, so that the second downlink data packet can be transmitted by using the wireless local area network to which the wifi AP belongs.

Further, the transmitter 1803 is further configured to send an Xw interface establishment request to the wifi AP, where the Xw interface establishment request carries the following information: a General Packet Radio Service Tunneling Protocol-User Plane tunnel endpoint identifier GTP-U TEID of the base station and a Media Access Control MAC address of the base station; and
the receiver 1804 is further configured to receive an Xw interface establishment response sent by the wifi AP, where the Xw interface establishment response carries the following information: a GTP-U TEID of the wifi AP and a MAC address of the wifi AP.

Further, the receiver 1804 is further configured to receive a first uplink data packet sent by the UE; and receive a second uplink data packet sent by the wifi AP;
the processor 1802 is further configured to combine the first uplink data packet and the second uplink data packet into an uplink data packet; and
the transmitter is further configured to send the uplink data packet to the core network device.

Further, the processor 1802 is specifically configured to:
remove, from the second data packet, header information that includes the mapping relationship between a radio bearer RB and a wifi access category AC, so that the second data packet is converted to have a format applicable to the cellular network; and
reorder the second data packet and the first data packet, to form the uplink data packet.

Further, the receiver 1804 is further configured to receive a first retransmission indication message sent by the wifi AP, where the first retransmission indication message is generated by the wifi AP after the wifi AP determines that the second downlink data packet is not sent successfully within a preset time, and the first retransmission indication message includes a data packet identifier of a data packet that needs to be retransmitted; and
the transmitter 1803 is further configured to send, to the UE according to the first retransmission indication message, the data packet corresponding to the data packet identifier.

Further, the transmitter 1803 is further configured to:
send a primary channel negotiation message to the wifi AP, where the required channel determined by the base station includes the primary channel; and
send a primary channel indication message to the UE, where the primary channel indication message includes a channel number of a primary channel determined by the wifi AP.

Further, the transmitter 1803 is further configured to:
send a channel addition request message to the wifi AP, where the channel addition request message includes a channel number of a to-be-added channel, and the required channel determined by the base station includes the to-be-added channel; and
send a channel addition indication message to the UE, where the channel addition indication message includes a channel number of the to-be-added channel determined by the wifi AP.

Further, the transmitter 1803 is further configured to:
send a channel deletion request message to the wifi AP, where the channel deletion request message includes a channel number of a to-be-deleted channel; and
send a channel deletion indication message to the UE, where the channel deletion indication message includes a channel number of the to-be-deleted channel determined by the wifi AP.

Further, the transmitter 1803 is further configured to:
send an indication message for deactivating a wifi channel to the UE, where the indication message for deactivating the wifi channel includes a channel number of the to-be-deactivated wifi channel; or
send an indication message for activating a wifi channel to the UE, where the indication message for activating the wifi channel includes a channel number of the to-be-activated wifi channel.

Further, the transmitter 1803 is further configured to:
send a wifi channel sequence indication message to the UE, so that the UE receives or sends data by using a sequence determined by the base station and by using the wifi channel.

Further, the processor 1802 is further configured to:
determine a size of the second downlink data packet according to load of a wifi channel and/or strength of a wifi signal.

Further, the wifiSCell request message sent by the transmitter 1803 further includes:
a MAC address of the UE, capability information of the UE, context information of the UE, and radio bearer RB identifier information and corresponding QoS information of the second data packet; and
the receiver 1804 is further configured to receive a response message for adding a wifiSCell that is sent by the wifi AP, where the response message for adding a wifiSCell includes: capability information of the wifi AP.

The base station in this embodiment sends a first downlink data packet in a downlink data packet to user equipment UE, and sends a second downlink data packet in the downlink data packet to a Wireless Fidelity access point wifi AP, so that the wifi AP sends the second downlink data packet to the UE. This implements data offloading at a granularity of a data packet, so that a cellular radio resource and a wifi radio resource are coordinated at a granularity of a data packet, thereby improving radio resource utilization.

FIG. 19 is a schematic structural diagram of an embodiment of UE according to the present invention. As shown in FIG. 19, UE 1900 of this embodiment may include: a memory 1901, a processor 1902, a transmitter 1903, and a receiver 1904. The memory 1901, the processor 1902, the transmitter 1903, and the receiver 1904 may be connected by using a system bus or in another manner, and in FIG. 19, connection by using a system bus is used as an example, where the system bus may be an ISA bus, a PCI bus, an EISA bus, or the like. The system bus may be classified into an address bus, a data bus, a control bus, and the like. For ease of illustration, in FIG. 19, only one line is used to represent the system bus, but it does not indicate that there is only one bus or one type of bus, where
the receiver 1904 is configured to receive a first downlink data packet sent by a base station; and receive a second downlink data packet sent by a Wireless Fidelity access point wifi AP; and
the processor 1902 is configured to combine the first downlink data packet and the second downlink data packet into a downlink data packet,
where the second downlink data packet is sent by the base station to the wifi AP through an Xw interface, and the Xw interface is used by the base station to manage a wifi radio resource.

Further, header information of the second downlink data packet includes a mapping relationship between a radio bearer RB of a cellular network and a wifi access category AC of a wireless local area network, and the mapping relationship between a radio bearer RB of a cellular network and a wifi access category AC of a wireless local area network enables the second downlink data packet to be applicable to the wireless local area network to which the wifi AP belongs; and the processor 1902 is specifically configured to:
remove, from the second downlink data packet and according to information about a communication adaptation layer, the header information that includes the mapping relationship between a radio bearer RB and a wifi access category AC, so that the second data packet is converted to be applicable to the cellular network to which the base station belongs; and
reorder the first downlink data packet and the second downlink data, to form a downlink data packet.

Further, the receiver 1904 is further configured to:
receive a configuration message for adding a wifi secondary cell wifiSCell that is sent by the base station, where the configuration message for adding a wifiSCell includes the information about the communication adaptation layer and at least one of the following: a quantity of required channels, a channel number, a channel frequency, and channel bandwidth information, and the information about the communication adaptation layer includes the mapping relationship, established by the base station, from a radio bearer RB to a wifi access category AC; or
receive an indication message for deleting a wifiSCell that is sent by the base station, where the indication message for deleting a wifiSCell includes at least one of the following: a quantity of required channels, a channel number, a channel frequency, and channel bandwidth information.

Further, the transmitter 1903 is further configured to:
send a first uplink data packet to the base station; and
send a second uplink data packet to the wifi AP, so that the wifi AP sends the second uplink data packet to the base station.

Further, the processor 1902 is further configured to:
add the mapping relationship between a radio bearer RB and a wifi access category AC to header information of the second data packet, so that the second uplink data packet can be transmitted by using the wireless local area network to which the wifi AP belongs.

Further, the receiver 1904 is further configured to receive a second retransmission indication message sent by the wifi AP, where the second retransmission indication message is generated by the wifi AP after the wifi AP determines that the second uplink data packet is not sent successfully within a preset time, and the second retransmission indication message includes a data packet identifier of a data packet that needs to be retransmitted; and
the transmitter 1903 is further configured to send, to the base station according to the second retransmission indication message, the data packet corresponding to the data packet identifier.

Further, the receiver 1904 is further configured to:
receive a primary channel indication message sent by the base station, where the primary channel indication message includes a channel number of a primary channel determined by the wifi AP.

Further, the receiver 1904 is further configured to:
receive a channel addition indication message sent by the base station, where the channel addition indication message includes a channel number of a to-be-added channel determined by the wifi AP; or
receive a channel deletion indication message sent by the base station, where the channel deletion indication message includes a channel number of a to-be-deleted channel determined by the wifi AP.

Further, the receiver 1904 is further configured to:
receive an indication message for deactivating a wifi channel, where the indication message for deactivating the wifi channel is sent by the base station and includes a channel number of the to-be-deactivated wifi channel; or
receive an indication message for activating a wifi channel, where the indication message for activating the wifi channel is sent by the base station and includes a channel number of the to-be-activated wifi channel.

Further, the receiver 1904 is further configured to:
receive a wifi channel sequence indication message sent by the base station; and
the receiving module or the sending module is specifically configured to send or receive data by using the wifi channel and by using a sequence determined by the base station.

Further, the processor 1902 is further configured to:
determine a size of the second uplink data packet according to load of a wifi channel and/or strength of a wifi signal.

In this embodiment, UE separately receives a first downlink data packet sent by a base station and a second downlink data packet sent by a wifi AP, and then combines the first downlink data packet and the second downlink data packet into a downlink data packet. This implements data offloading at a granularity of a data packet, so that a cellular radio resource and a wifi radio resource are coordinated at a granularity of a data packet, thereby improving radio resource utilization.

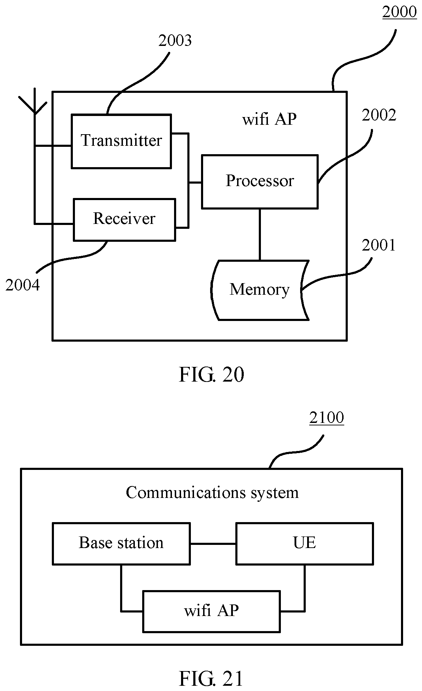

FIG. 20 is a schematic structural diagram of an embodiment of a wifi AP according to the present invention. As shown in FIG. 20, a wifi AP 2000 of this embodiment may include: a memory 2001, a processor 2002, a transmitter 2003, and a receiver 2004. The memory 2001, the processor 2002, the transmitter 2003, and the receiver 2004 may be connected by using a system bus or in another manner, and in FIG. 20, connection by using a system bus is used as an example, where the system bus may be an ISA bus, a PCI bus, an EISA bus, or the like. The system bus may be classified into an address bus, a data bus, a control bus, and the like. For ease of illustration, in FIG. 20, only one line is used to represent the system bus, but it does not indicate that there is only one bus or one type of bus, where
the receiver 2004 is configured to receive a second downlink data packet that is sent by a base station through an Xw interface; and
the transmitter 2003 is configured to send the second downlink data packet to user equipment UE,
where the Xw interface is used by the base station to manage a wifi radio resource.

Further, header information of the second downlink data packet includes a mapping relationship between a radio bearer RB of a cellular network and a wifi access category AC of a wireless local area network, and the mapping relationship is used to enable the second downlink data packet to be transmitted by using the wireless local area network to which the wifi AP belongs.

Further, the receiver 2004 is further configured to:
receive a request message for adding a wifi secondary cell wifiSCell that is sent by the base station, where the request message for adding a wifiSCell includes information about a communication adaptation layer and at least one of the following: a quantity of required channels, a channel number, a channel frequency, and channel bandwidth information, and the information about the communication adaptation layer includes a mapping relationship from a radio bearer RB of a cellular network to a wifi access category AC of a wireless local area network; or
receive a request message for deleting a wifiSCell that is sent by the base station, where the request message for deleting a wifiSCell includes at least one of the following: a quantity of required channels, a channel number, a channel frequency, and channel bandwidth information, and the wifi AP sends a response message for deleting a wifiSCell to the base station.

Further, the receiver 2004 is further configured to receive an Xw interface establishment request sent by the base station, where the Xw interface establishment request carries at least one of the following: a base station identifier of the base station, a General Packet Radio Service Tunneling Protocol-User Plane tunnel endpoint identifier GTP-U TEID of the base station, an Internet Protocol IP address of the base station, and a Media Access Control MAC address of the base station; and
the transmitter 2003 is further configured to send an Xw interface establishment response to the base station, where the Xw interface establishment response carries at least one of the following: an AP identifier of the wifi AP, a GTP-U TEID of the wifi AP, an IP address of the wifi AP, and a MAC address of the wifi AP.

Further, the receiver 2004 is further configured to receive a second uplink data packet sent by the UE; and
the transmitter 2003 is further configured to send the second uplink data packet to the base station.

Further, the transmitter 2003 is further configured to: when the wifi AP determines that the second downlink data packet is not successfully sent to the UE within a preset time, the wifi AP sends a first retransmission indication message to the base station, where the first retransmission indication message includes a data packet identifier of a data packet that needs to be retransmitted, so that the base station sends, to the UE, the data packet corresponding to the data packet identifier.

Further, the transmitter 2003 is further configured to: when the wifi AP determines that the second uplink data packet is not successfully sent to the base station within a preset time, the wifi AP sends a second retransmission indication message to the UE, where the second retransmission indication message includes a data packet identifier of a data packet that needs to be retransmitted, so that the UE sends, to the base station, the data packet corresponding to the data packet identifier.

Further, the receiver 2004 is further configured to receive a primary channel negotiation message sent by the base station; and
the transmitter 2003 is further configured to send a primary channel negotiation response message to the base station, where the primary channel negotiation response message includes a channel number of a primary channel determined by the wifi AP.

Further, the receiver 2004 is further configured to:
receive a channel addition request message sent by the base station, where the channel addition request message includes a channel number of a to-be-added channel; or
receive a channel deletion request message sent by the base station, where the channel deletion request message includes a channel number of a to-be-deleted channel.

Further, the request message for adding a wifi secondary cell wifiSCell that is sent by the base station and received by the wifi AP further includes:
a MAC address of the UE, capability information of the UE, context information of the UE, and radio bearer RB identifier information and corresponding QoS information of the second data packet; and
the transmitter 2003 is further configured to:
   send, to the base station, a response message for adding a wifiSCell, where the response message for adding a wifiSCell includes: capability information of the wifi AP.

In this embodiment, a wifi AP receives, from a base station, a second downlink data packet in a downlink data packet, and forwards the second downlink data packet to UE, so that some downlink data is transmitted by using a wifi radio resource, and data offloading is performed at a granularity of a data packet; therefore, a cellular radio resource and a wifi radio resource are coordinated at a granularity of a data packet, thereby improving radio resource utilization.

FIG. 21 is a schematic structural diagram of an embodiment of a communications system according to the present invention. As shown in FIG. 21, a communications system 2100 of this embodiment may include: the base station shown in FIG. 18, the UE shown in FIG. 19, and the wifi AP shown in FIG. 20.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission apparatus (300), comprising:
a receiving module (11), configured to receive a downlink data packet sent by a core network device;
a sending module (12), configured to send a first downlink data packet in the downlink data packet to user equipment UE, and send a second downlink data packet in the downlink data packet to a Wireless Fidelity access point wifi AP through an Xw interface, so that the wifi AP is enabled to send the second downlink data packet to the UE, wherein a base station is enabled to manage a wifi radio resource by using the Xw interface; and
a communication adaptation layer establishment module (13), configured to establish a communication adaptation layer between the base station and the wifi AP, wherein the communication adaptation layer is used to establish a mapping relationship from a radio bearer RB of a cellular network to a wifi access category AC of a wireless local area network, wherein the sending module is further configured to:
send, to the wifi AP, a request message for adding a wifi secondary cell wifiSCell, and send, to the user equipment UE, a configuration message for adding a wifi secondary cell wifiSCell, wherein the request message for adding a wifiscell or the configuration message for adding a wifiSCell comprises information about the communication adaptation layer and at least one of the following: a quantity of required channels, a channel number, a channel frequency, and a channel bandwidth.

2. The apparatus according to claim 1, wherein,
the sending module is further configured to send an Xw interface establishment request to the wifi AP, wherein the Xw interface establishment request carries the following information: a base station identifier of the base station, a General Packet Radio Service Tunneling Protocol-User Plane tunnel endpoint identifier GTP-U TEID of the base station, an Internet Protocol IP address of the base station, and a Media Access Control MAC address of the base station; and
the receiving module is further configured to receive an Xw interface establishment response sent by the wifi AP, wherein the Xw interface establishment response carries the following information: an AP identifier of the wifi AP, a GTP-U TEID of the wifi AP, an IP address of the wifi AP, and a MAC address of the wifi AP.

3. The apparatus according to claim 1, wherein the request message for adding wifiSCell sent by the sending module further comprises:
a MAC address of the UE, capability information of the UE, context information of the UE, radio bearer RB identifier information and corresponding QoS information of the second data packet; and
the receiving module is further configured to receive a response message for adding a wifiSCell that is sent by the wifi AP, wherein the response message for adding a wifiSCell comprises: capability information of the wifi AP.

4. A data transmission method, comprising:
receiving (801), by a base station, a downlink data packet sent by a core network device; and
sending (802), by the base station, a first downlink data packet in the downlink data packet to user equipment UE, and sending a second downlink data packet in the downlink data packet to a Wireless Fidelity access point wifi AP through an Xw interface, so that the wifi AP sends the second downlink data packet to the UE, wherein the base station manages a wifi radio resource by using the Xw interface;
establishing, by the base station, a communication adaptation layer between the base station and the wifi AP, wherein the communication adaptation layer is used to establish a mapping relationship from a radio bearer RB of a cellular network to a wifi access category AC of a wireless local area network,
the data transmission method further comprising:
sending, by the base station to the wifi AP, a request message for adding a wifi secondary cell wifiSCell, and sending, to the user equipment UE, a configuration message for adding a wifi secondary cell wifiSCell, wherein the request message for adding a wifiSCell or the configuration message for adding a wifiSCell comprises information about the communication adaptation layer and at least one of the following: a quantity of required channels, a channel number, a channel frequency, and a channel bandwidth.

5. The method according to claim 4, further comprising:
sending, by the base station, an Xw interface establishment request to the wifi AP, wherein the Xw interface establishment request carries the following information: a base station identifier of the base station, a General Packet Radio Service Tunneling Protocol-User Plane tunnel endpoint identifier GTP-U TEID of the base station, an Internet Protocol IP address of the base station, and a Media Access Control MAC address of the base station; and
receiving, by the base station, an Xw interface establishment response sent by the wifi AP, wherein the Xw interface establishment response carries the following information: a GTP-U TEID of the wifi AP and a MAC address of the wifi AP.

6. The method according to claim 4, wherein
the request message for adding a wifiscell that is sent by the base station to the wifi AP further comprises: a MAC address of the UE, capability information of the UE, context information of the UE, and radio bearer RB identifier information and corresponding QoS information of the second data packet; and
the method further comprises: receiving, by the base station, a response message for adding a wifiSCell that is sent by the wifi AP, wherein the response message for adding a wifiSCell comprises: capability information of the wifi AP.

## Patentansprüche

1. Datenübertragungseinrichtung (300), umfassend:
ein Empfangsmodul (11) eingerichtet zum Empfangen eines durch eine Kernnetzvorrichtung gesendeten Abwärts-Datenpakets;
ein Sendemodul (12) eingerichtet zum Senden eines ersten Abwärts-Datenpakets in dem Abwärts-Datenpaket zu einem Benutzergerät UE (User Equipment) und Senden eines zweiten Abwärts-Datenpakets in dem Abwärts-Datenpaket zu einem Wireless-Fidelity-Zugangspunkt WiFi-AP durch eine Xw-Schnittstelle, so dass der WiFi-AP befähigt ist, das zweite Abwärts-Datenpaket zu dem UE zu senden, wobei eine Basisstation befähigt ist, durch Verwenden der Xw-Schnittstelle eine WiFi-Funkressource zu verwalten; und
ein Kommunikationsanpassungsschichtherstellungsmodul (13) eingerichtet zum Herstellen einer Kommunikationsanpassungsschicht zwischen der Basisstation und dem WiFi-AP, wobei die Kommunikationsanpassungsschicht zum Herstellen eines Abbildungsverhältnisses von einem Funkträger RB (Radio Bearer) eines Zellularnetzes zu einer WiFi-Zugangskategorie AC eines drahtlosen Ortsnetzes benutzt wird, wobei das Sendemodul weiterhin eingerichtet ist zum:
Senden zu dem WiFi-AP einer Anfragenachricht zum Zufügen einer WiFi-Sekundärzelle wifiSCell und Senden zu dem Benutzergerät UE einer Einrichtungsnachricht zum Zufügen einer WiFi-Sekundärzelle wifiSCell, wobei die Anfragenachricht zum Zufügen einer wifiSCell oder die Einrichtungsnachricht zum Zufügen einer wifiSCell Informationen über die Kommunikationsanpassungsschicht umfasst und wenigstens eines der Folgenden: eine Menge von erforderlichen Kanälen, eine Kanalnummer, eine Kanalfrequenz und eine Kanalbandbreite.

2. Einrichtung nach Anspruch 1, wobei
das Sendemodul weiterhin eingerichtet ist zum Senden einer Xw-Schnittstellenherstellungsanfrage zum WiFi-AP, wobei die Xw-Schnittstellenherstellungsanfrage die folgenden Informationen führt: eine Basisstationskennung der Basisstation, eine allgemeine Tunnelendpunktkennung auf Paketfunkdiensttunnelprotokollbenutzerebene GTP-U TEID (General Packet Radio Service Tunneling Protocol-User Plane tunnel endpoint identifier) der Basisstation, eine Internet-Protokoll(IP)-Adresse der Basisstation und eine Medienzugangssteuerungs(MAC - Media Access Control)-Adresse der Basisstation; und
das Empfangsmodul weiterhin eingerichtet ist zum Empfangen einer durch den WiFi-AP gesendeten Xw-Schnittstellenherstellungsantwort, wobei die Xw-Schnittstellenherstellungsantwort die folgenden Informationen führt: eine AP-Kennung des WiFi-AP, eine GTP-U TEID des WiFi-AP, eine IP-Adresse des WiFi-AP und eine MAC-Adresse des WiFi-AP.

3. Einrichtung nach Anspruch 1, wobei die Anfragenachricht zum Zufügen der durch das Sendemodul gesendeten wifiSCell weiterhin umfasst:
eine MAC-Adresse des UE, Fähigkeitsinformationen des UE, Kontextinformationen des UE, Funkträger(RB)-Kennungsinformationen und entsprechende QoS-Informationen des zweiten Datenpakets; und
das Empfangsmodul weiterhin eingerichtet ist zum Empfangen einer Antwortnachricht zum Zufügen einer wifiSCell, die durch den WiFi-AP gesendet wird, wobei die Antwortnachricht zum Zufügen einer wifiSCell Fähigkeitsinformationen des WiFi-AP umfasst.

4. Datenübertragungsverfahren, umfassend:
Empfangen (801) durch eine Basisstation eines durch eine Kernnetzvorrichtung gesendeten Abwärts-Datenpakets; und
Senden (802) durch die Basisstation eines ersten Abwärts-Datenpakets in dem Abwärts-Datenpaket zum Benutzergerät UE und Senden eines zweiten Abwärts-Datenpakets in dem Abwärts-Datenpaket zu einem Wireless-Fidelity-Zugangspunkt WiFi-AP durch eine Xw-Schnittstelle, so dass der WiFi-AP das zweite Abwärts-Datenpaket zu dem UE sendet, wobei die Basisstation eine WiFi-Funkressource durch Verwenden der Xw-Schnittstelle verwaltet;
Herstellen durch die Basisstation einer Kommunikationsanpassungsschicht zwischen der Basisstation und dem WiFi-AP, wobei die Kommunikationsanpassungsschicht zum Herstellen eines Abbildungsverhältnisses von einem Funkträger RB eines Zellularnetzes zu einer WiFi-Zugangskategorie AC eines drahtlosen Ortsnetzes benutzt wird,
wobei das Datenübertragungsverfahren weiterhin umfasst:
Senden durch die Basisstation zu dem WiFi-AP einer Anfragenachricht zum Zufügen einer WiFi-Sekundärzelle wifiSCell und Senden zu dem Benutzergerät UE einer Einrichtungsnachricht zum Zufügen einer WiFi-Sekundärzelle wifiSCell, wobei die Anfragenachricht zum Zufügen einer wifiSCell oder die Einrichtungsnachricht zum Zufügen einer wifiSCell Informationen über die Kommunikationsanpassungsschicht umfasst und
wenigstens eines der Folgenden: eine Menge erforderlicher Kanäle, eine Kanalnummer, eine Kanalfrequenz und eine Kanalbandbreite.

5. Verfahren nach Anspruch 4, weiterhin umfassend:
Senden durch die Basisstation einer Xw-Schnittstellenherstellungsanfrage zum dem WiFi-AP, wobei die Xw-Schnittstellenherstellungsanfrage die folgenden Informationen führt: eine Basisstationskennung der Basisstation, eine allgemeine Tunnelendpunktkennung auf Paketfunkdiensttunnelprotokollbenutzerebene GTP-U TEID der Basisstation, eine Internet-Protokoll(IP)-Adresse der Basisstation und eine Medienzugangssteuerungs(MAC -Media Access Control)-Adresse der Basisstation; und
Empfangen durch die Basisstation einer durch den WiFi-AP gesendeten Xw-Schnittstellenherstellungsantwort, wobei die Xw-Schnittstellenherstellungsantwort die folgenden Informationen führt: eine GTP-U TEID des WiFi-AP und eine MAC-Adresse des WiFi-AP.

6. Verfahren nach Anspruch 4, wobei
die Anfragenachricht zum Zufügen einer wifiSCell, die durch die Basisstation zu dem WiFi-AP gesendet wird, weiterhin umfasst: eine MAC-Adresse des UE, Fähigkeitsinformationen des UE, Kontextinformationen des UE und Funkträger(RB)-Kennungsinformationen und entsprechende QoS-Informationen des zweiten Datenpakets; und
das Verfahren weiterhin umfasst: Empfangen durch die Basisstation einer Antwortnachricht zum Zufügen einer wifiSCell, die durch den WiFi-AP gesendet wird, wobei die Antwortnachricht zum Zufügen einer wifiSCell umfasst: Fähigkeitsinformationen des WiFi-AP.

## Revendications

1. Appareil de transmission de données (300), comprenant :
un module de réception (11), configuré pour recevoir un paquet de données de liaison descendante envoyé par un dispositif de réseau coeur ;
un module d'envoi (12), configuré pour envoyer un premier paquet de données de liaison descendante dans le paquet de données de liaison descendante à un équipement utilisateur, et envoyer un second paquet de données de liaison descendante dans le paquet de données de liaison descendante à un point d'accès de fidélité sans fil, AP wi-fi, par le biais d'une interface Xw, de telle sorte que l'AP wi-fi soit en mesure d'envoyer le second paquet de données de liaison descendante à l'UE, dans lequel une station de base est activée pour gérer une ressource radio wi-fi en utilisant l'interface Xw ; et
un module d'établissement de couche d'adaptation de communication (13), configuré pour établir une couche d'adaptation de communication entre la station de base et l'AP wi-fi, dans lequel la couche d'adaptation de communication est utilisée pour établir une relation de mise en correspondance entre un support radio RB d'un réseau cellulaire et une catégorie d'accès AC wi-fi d'un réseau local sans fil, dans lequel le module d'envoi est configuré en outre pour :
envoyer, à l'AP wi-fi, un message de demande d'ajout d'une cellule secondaire wi-fi wifiSCell, et envoyer, à l'équipement utilisateur UE, un message de configuration d'ajout d'une cellule secondaire wi-fi wifiSCell, dans lequel le message de demande d'ajout d'une wifiscell ou le message de configuration d'ajout d'une wifiSCell comprend des informations sur la couche d'adaptation de communication et au moins l'une des informations suivantes : une quantité de canaux requis, un numéro de canal, une fréquence de canal et une largeur de bande de canal.

2. Appareil selon la revendication 1, dans lequel,
le module d'envoi est configuré en outre pour envoyer une demande d'établissement d'interface Xw à l'AP wi-fi, dans lequel la demande d'établissement d'interface Xw comporte les informations suivantes : un identifiant de station de base de la station de base, un identifiant de point d'extrémité de tunnel du protocole de tunnellisation du service général de radiocommunication en mode paquets-plan utilisateur GTP-U TEID de la station de base, une adresse de protocole Internet IP de la station de base, et une adresse de commande d'accès au support MAC de la station de base ; et
le module de réception est configuré en outre pour recevoir une réponse d'établissement d'interface Xw envoyée par l'AP wi-fi, dans lequel la réponse d'établissement d'interface Xw comporte les informations suivantes : un identifiant AP de l'AP wi-fi, un GTP-U TEID de l'AP wi-fi, une adresse IP de l'AP wi-fi, et une adresse MAC de l'AP wi-fi.

3. Appareil selon la revendication 1, dans lequel le message de demande d'ajout d'une wifiSCell envoyé par le module d'envoi comprend en outre :
une adresse MAC de l'UE, des informations de capabilité de l'UE, des informations de contexte de l'UE, des informations d'identifiant de support radio RB et des informations de QoS correspondantes du second paquet de données ; et le module de réception est configuré en outre pour recevoir un message de réponse d'ajout de wifiSCell qui est envoyé par l'AP wi-fi, dans lequel le message de réponse d'ajout de wifiSCell comprend : des informations de capabilité de l'AP wi-fi.

4. Procédé de transmission de données, comprenant :
la réception (801), par une station de base, d'un paquet de données de liaison descendante envoyé par un dispositif de réseau coeur ; et
l'envoi (802), par la station de base, d'un premier paquet de données de liaison descendante dans le paquet de données de liaison descendante à un équipement utilisateur UE, et l'envoi d'un second paquet de données de liaison descendante dans le paquet de données de liaison descendante à un point d'accès de fidélité sans fil, AP wi-fi, par le biais d'une interface Xw, de telle sorte que l'AP wi-fi soit en mesure d'envoyer le second paquet de données de liaison descendante à l'UE, dans lequel la station de base gère une ressource radio wi-fi à l'aide de l'interface Xw ;
l'établissement, par la station de base, d'une couche d'adaptation de communication entre la station de base et l'AP wi-fi, dans lequel la couche d'adaptation de communication est utilisée pour établir une relation de mise en correspondance entre un support radio RB d'un réseau cellulaire et une catégorie d'accès AC wi-fi d'un réseau local sans fil,
le procédé de transmission de données comprenant en outre :
l'envoi, par la station de base à l'AP wi-fi, d'un message de demande d'ajout d'une cellule secondaire wi-fi, wifiSCell, et l'envoi, à l'équipement utilisateur UE, d'un message de configuration d'ajout de cellule secondaire wi-fi wifiSCell, dans lequel le message de demande d'ajout d'une wifiSCell ou le message de configuration d'ajout d'une wifiSCell comprend des informations sur la couche d'adaptation de communication et au moins l'une des informations suivantes : une quantité de canaux requis, un numéro de canal, une fréquence de canal et une largeur de bande de canal.

5. Procédé selon la revendication 4, comprenant en outre :
l'envoi, par la station de base, d'une demande d'établissement d'interface Xw à l'AP wi-fi, dans lequel la demande d'établissement d'interface Xw comporte les informations suivantes : un identifiant de station de base de la station de base, un identifiant de point d'extrémité de tunnel du protocole de tunnellisation du service général de radiocommunication en mode paquets-plan utilisateur GTP-U TEID de la station de base, une adresse de protocole Internet IP de la station de base, et une adresse de commande d'accès au support MAC de la station de base ; et
la réception, par la station de base, d'une réponse d'établissement d'interface Xw envoyée par l'AP wi-fi, dans lequel la réponse d'établissement d'interface Xw comporte les informations suivantes : un GTP-U TEID de l'AP wi-fi et une adresse MAC de l'AP wi-fi.

6. Procédé selon la revendication 4, dans lequel
le message de demande d'ajout d'une wifiscell envoyé par la station de base à l'AP wi-fi comprend en outre : une adresse MAC de l'UE, des informations de capabilité de l'UE, des informations de contexte de l'UE ainsi que des informations d'identifiant de support radio RB et des informations de QoS correspondantes du second paquet de données ; et
le procédé comprend en outre : la réception, par la station de base, d'un message de réponse d'ajout de wifiSCell qui est envoyé par l'AP wi-fi, dans lequel le message de réponse d'ajout de wifiSCell comprend : des informations de capabilité de l'AP wi-fi.
